(19) **Europäisches Patentamt / European Patent Office / Office européen des brevets**

(11) **EP 3 431 632 A1**

(12) **DEMANDE DE BREVET EUROPEEN**

(43) Date de publication:
**23.01.2019 Bulletin 2019/04**

(21) Numéro de dépôt: **18184569.4**

(22) Date de dépôt: **19.07.2018**

(51) Int Cl.:
*C25C 3/34* (2006.01)    *C25C 7/06* (2006.01)
*G01N 27/26* (2006.01)   *G01N 27/413* (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **21.07.2017 FR 1756976**

(71) Demandeur: **Commissariat à l'énergie atomique et aux énergies alternatives**
**75015 Paris (FR)**

(72) Inventeurs:
• **DIAZ, Laure**
**26130 SAINT PAUL TROIS CHATEAUX (FR)**
• **SERP, Jérôme**
**30150 SAINT GENIES DE COMOLAS (FR)**
• **SERVE, Guillaume**
**30200 BAGNOLS SUR CEZE (FR)**
• **CHAMELOT, Pierre**
**31120 LACROIX FALGARDE (FR)**
• **GIBILARO, Mathieu**
**31000 TOULOUSE (FR)**
• **MASSOT, Laurent**
**31460 CARAMAN (FR)**

(74) Mandataire: **Brevalex**
**95, rue d'Amsterdam**
**75378 Paris Cedex 8 (FR)**

(54) **UTILISATION DE LA CHRONOPOTENTIOMÉTRIE INVERSE POUR LA PRODUCTION D'ÉLÉMENTS CHIMIQUES À L'ÉTAT MÉTALLIQUE OU D'ALLIAGES DE CEUX-CI PAR RÉDUCTION ÉLECTROLYTIQUE EN MILIEUX DE SELS FONDUS**

(57)     L'invention se rapporte à l'utilisation de la chronopotentiométrie inverse pour obtenir un indicateur de rendement d'une réduction électrolytique à l'état métallique d'au moins un élément chimique choisi parmi les terres rares et les actinides, la réduction électrolytique étant réalisée dans un milieu de sels fondus.

Elle se rapporte également à un procédé de sélection par chronopotentiométrie inverse d'un ensemble de conditions opératoires pour la production à l'état métallique d'au moins un élément chimique choisi parmi les terres rares et les actinides, par réduction électrolytique dans un milieu de sels fondus, les conditions opératoires étant la composition qualitative du milieu de sels fondus, la concentration de l'élément chimique dans le milieu de sels fondus, la température du milieu de sels fondus et la densité de courant cathodique.

Elle se rapporte aussi à un procédé de production à l'état métallique d'au moins un élément chimique choisi parmi les terres rares et les actinides, par réduction électrolytique dans un milieu de sels fondus, qui comprend la mise en oeuvre dudit procédé de sélection d'un ensemble de conditions opératoires.

Elle se rapporte encore à des procédés de production de néodyme et de dysprosium à l'état métallique par réduction électrolytique en milieux de sels fondus.

## Description

## DOMAINE TECHNIQUE

L'invention se rapporte au domaine de la production d'éléments chimiques à l'état métallique, c'est-à-dire au degré d'oxydation 0, par réduction électrolytique de ces éléments chimiques en milieux de sels fondus.

Plus spécifiquement, l'invention se rapporte à l'utilisation de la chronopotentiométrie inverse - encore connue sous le nom de chronopotentiométrie par inversion de courant - pour obtenir un indicateur de rendement d'une réduction électrolytique à l'état métallique d'au moins un élément chimique choisi parmi les terres rares et les actinides, la réduction électrolytique étant réalisée dans un milieu de sels fondus.

L'obtention d'indicateurs de rendement par chronopotentiométrie inverse pour des réductions électrolytiques à l'état métallique d'éléments chimiques peut notamment être mise à profit pour sélectionner certaines conditions opératoires dans lesquelles ces réductions électrolytiques doivent être réalisées si l'on veut qu'elles présentent des rendements optimisés.

Aussi, l'invention se rapporte-t-elle également à un procédé de sélection par chronopotentiométrie inverse d'un ensemble de conditions opératoires pour la production à l'état métallique d'au moins un élément chimique choisi parmi les terres rares et les actinides, par réduction électrolytique dans un milieu de sels fondus, les conditions opératoires étant la composition qualitative du milieu de sels fondus, la concentration de l'élément chimique dans le milieu de sels fondus, la température du milieu de sels fondus et la densité de courant cathodique.

L'invention se rapporte également à un procédé de production à l'état métallique d'au moins un élément chimique choisi parmi les terres rares et les actinides, par réduction électrolytique dans un milieu de sels fondus, qui comprend la mise en oeuvre du procédé de sélection d'un ensemble de conditions opératoires selon l'invention.

L'invention se rapporte encore à des procédés de production de néodyme et de dysprosium à l'état métallique par réduction électrolytique en milieu de sels fondus.

L'invention peut notamment être utilisée pour produire des terres rares métalliques ou des alliages de terres rares métalliques (tel que le mischmétal) à partir de minerais naturels contenant des terres rares, de déchets d'équipements électriques et électroniques (encore appelés « DEEE » ou « D3E ») contenant des terres rares (aimants permanents, disques durs d'ordinateurs, dispositifs magnétiques, etc) ou de rebuts de fabrication de produits contenant des terres rares ainsi que pour produire des actinides métalliques ou des alliages d'actinides métalliques à partir de combustibles nucléaires usés.

## ÉTAT DE LA TECHNIQUE ANTÉRIEURE

Les propriétés physiques et chimiques particulières des terres rares (scandium, yttrium et lanthanides) font que ces terres rares représentent actuellement des éléments chimiques indispensables dans de nombreux domaines industriels : industries du verre et des céramiques, polissage, catalyse (notamment pétrolière et automobile), fabrication d'alliages de haute technologie, d'aimants permanents (notamment du type NdFeB), de dispositifs optiques (appareils photos et caméras notamment), de luminophores, de batteries rechargeables pour véhicules électriques ou hybrides, d'alternateurs pour éoliennes, etc.

Dans ces applications, près de 40 % des terres rares sont utilisées à l'état métallique, le reste étant principalement utilisé sous la forme d'oxydes.

Du fait de leur spécificité, la demande mondiale en terres rares ne cesse de croître (de l'ordre de 9 % à 15 % par an). Toutefois, comme le nombre de pays producteurs de terres rares reste limité - la Chine fournissant actuellement plus de 90 % de la production mondiale des terres rares à elle seule - il existe à terme un risque non négligeable de rupture d'approvisionnement en terres rares, d'où la nécessité d'optimiser toutes les voies permettant de les produire.

Les terres rares sont considérées comme étant parmi les éléments chimiques les plus difficiles à produire à l'état métallique sous forme pure, c'est-à-dire non alliée à un métal autre qu'une terre rare. En effet, les terres rares sont avec les métaux alcalins et les métaux alcalino-terreux les métaux les plus réducteurs et réactifs de la classification périodique des éléments, en particulier aux températures élevées nécessaires à leur production.

Les terres rares à l'état métallique sont obtenues soit par réduction métallothermique soit par réduction électrolytique en milieux de sels fondus.

Pour la réduction électrolytique en milieux de sels fondus, trois types de milieux ont été étudiés : les chlorures fondus, les fluorures fondus et les chlorofluorures fondus, ces derniers étant censés cumuler les avantages des chlorures fondus dont notamment une faible température de travail (400°C-850°C) et une réaction anodique simple avec production de chlore gazeux, et ceux des fluorures fondus dont notamment une stabilisation des hauts degrés d'oxydation.

Il s'avère que, quel que soit le milieu de sels fondus utilisé, les rendements obtenus à ce jour pour la production de terres rares métalliques sous forme pure par réduction électrolytique sont insuffisants.

Ainsi, si l'on prend, par exemple, le cas du néodyme, les rendements rapportés dans la littérature pour la production de cette terre rare à l'état de métal et sous forme pure sont inférieurs à 40 % en milieu de chlorures fondus (cf. H. Vogel et B. Friedrich, Proceedings of the 7th European Metallurgical Conference EMC 2015, Düsseldorf, Allemagne, ci-après référence **[1]**), proches de 55 % en milieu de fluorures fondus (cf. D. K. Dysinger et J. E. Murphy, US Bureau of Mines 1994, ci-après référence **[2]**) et sont de 40 % en milieu de chlorofluorures fondus (cf. la demande de brevet européen n° 1 845 515, ci-après référence **[3]**).

Il serait donc souhaitable de parvenir à améliorer ces rendements.

Or, dans le cadre de leurs travaux, les Inventeurs ont constaté que de manière surprenante :

- la chronopotentiométrie inverse, qui consiste en une électrolyse de très courte durée (typiquement de quelques secondes) et qui est classiquement employée pour apprécier la nature soluble ou insoluble de l'espèce chimique qui se forme au cours de cette électrolyse, peut aussi être utilisée pour obtenir une indication du rendement que présenterait une électrolyse qui serait réalisée pour produire en quantité ladite espèce chimique dans des conditions opératoires analogues à celles utilisées pour la chronopotentiométrie, et que, par voie de conséquence
- la chronopotentiométrie inverse peut aussi être utilisée comme un outil permettant de tester l'impact de certaines conditions opératoires sur les rendements de réductions électrolytiques en milieux de sels fondus visant à produire à l'état de métaux des éléments chimiques tels que les terres rares mais aussi les actinides et, par là même, de sélectionner celles de ces conditions opératoires qui sont susceptibles de conduire à des rendements d'électrolyses optimisés.

Et c'est sur ces constatations qu'est basée l'invention.

## EXPOSÉ DE L'INVENTION

L'invention se rapporte, donc, en premier lieu, à l'utilisation de la chronopotentiométrie inverse pour obtenir un indicateur de rendement d'une réduction électrolytique à l'état métallique d'au moins un élément chimique choisi parmi les terres rares et les actinides, la réduction électrolytique étant réalisée dans un milieu de sels fondus.

Dans le cadre de l'invention, la chronopotentiométrie inverse est, de préférence, utilisée pour déterminer des indicateurs de rendement d'une pluralité de réductions électrolytiques de l'élément chimique, dont on fait varier au moins une condition opératoire choisie parmi la composition qualitative du milieu de sels fondus, la concentration de l'élément chimique dans le milieu de sels fondus, la température du milieu de sels fondus et la densité de courant cathodique.

De manière préférée, les indicateurs de rendement sont utilisés pour sélectionner au moins un ensemble de conditions opératoires pour la production à l'état métallique de l'élément chimique par réduction électrolytique dans un milieu de sels fondus, les conditions opératoires étant la composition qualitative du milieu de sels fondus, la concentration de l'élément chimique dans le milieu de sels fondus, la température du milieu de sels fondus et la densité de courant cathodique.

Conformément à l'invention, cette sélection peut notamment être réalisée par un procédé qui comprend les étapes suivantes :

a) choisir $n$ ensembles de conditions opératoires, $n$ étant un entier au moins égal à 2 et les $n$ ensembles de conditions opératoires différant les uns des autres par au moins une condition opératoire ;
b) tester chacun des $n$ ensembles de conditions opératoires par chronopotentiométrie inverse pour obtenir $n$ chronopotentiogrammes inverses ;
c) déterminer à partir des $n$ chronopotentiogrammes inverses ainsi obtenus $n$ indicateurs de rendement de réductions électrolytiques de l'élément chimique qui seraient réalisées dans les conditions opératoires des $n$ ensembles de conditions opératoires ;
d) comparer entre eux les $n$ indicateurs de rendement ainsi obtenus ; et
e) retenir l'un des $n$ indicateurs de rendement en fonction du résultat de la comparaison et sélectionner ainsi l'ensemble des conditions opératoires pour lesquelles cet indicateur de rendement a été obtenu.

Aussi l'invention a-t-elle également pour objet un tel procédé.

Avantageusement, les $n$ indicateurs de rendement sont exprimés en pourcentages et sont déterminés en mesurant un temps de transition en oxydation $\tau_{ox}$ et un temps de transition en réduction $\tau_{réd}$ sur les $n$ chronopotentiogrammes inverses, en calculant les rapports $\tau_{ox}/\tau_{réd}$ et en multipliant ces rapports par 100.

Par ailleurs, les $n$ ensembles de conditions opératoires diffèrent les uns des autres préférentiellement par au plus deux conditions opératoires et, mieux encore, par une seule condition opératoire de sorte à mieux apprécier l'impact de cette condition opératoire sur le rendement de la réduction électrolytique.

Avantageusement, les $n$ ensembles de conditions opératoires diffèrent les uns des autres par la concentration de l'élément chimique dans le milieu de sels fondus et/ou la température du milieu de sels fondus.

Conformément à l'invention, le milieu de sels fondus est, de préférence, un milieu de chlorures fondus ou de chlorofluorures fondus de sorte que la réduction électrolytique de l'élément chimique s'accompagne d'une production de chlore gazeux pouvant être ultérieurement utilisé dans des réactions de carbochloration.

Dans le cas où il s'agit d'un milieu de chlorures fondus, alors celui-ci comprend préférentiellement du chlorure de lithium ou du chlorure de potassium ou un mélange de ceux-ci, auquel cas ce mélange présente avantageusement une composition proche ou identique à celle de l'eutectique LiCl-KCl, c'est-à-dire un rapport massique du chlorure de lithium au chlorure de potassium de 40/60 à 50/50 et, mieux encore, de 45,5/55,5 (eutectique) de sorte que sa température de fusion soit de 350°C ou proche de cette valeur. En milieu de chlorures fondus, l'élément chimique peut, lui-même, être présent sous la forme d'un chlorure, d'un fluorure ou d'un mélange chlorure/fluorure.

Dans le cas où il s'agit d'un milieu de chlorofluorures fondus, alors celui-ci comprend préférentiellement un mélange de chlorure de lithium et de fluorure de lithium, auquel cas ce mélange présente avantageusement une composition proche ou identique à celle de l'eutectique LiCl-LiF, c'est-à-dire un rapport massique du chlorure de lithium au fluorure de lithium de 75/25 à 85/15 et, mieux encore, de 79,2/20,8 (eutectique) de sorte que sa température de fusion soit de 500°C ou proche de cette valeur. En milieu de chlorofluorures fondus, l'élément chimique peut, lui-même, être présent sous la forme d'un chlorure, d'un fluorure, d'un mélange chlorure/fluorure, d'un mélange chlorure/oxyde, d'un mélange fluorure/oxyde ou encore d'un mélange chlorure/fluorure/oxyde.

Comme précédemment indiqué, l'élément chimique peut être choisi parmi les terres rares, auquel cas il est, de préférence, choisi parmi le néodyme, le dysprosium, le lanthane, le praséodyme et le cérium, le néodyme et le dysprosium, qui entrent tous deux dans la composition des aimants permanents NdFeB, étant tout particulièrement préférés.

En variante, l'élément chimique peut également être choisi parmi les actinides, auquel cas il est, de préférence, choisi parmi l'uranium(III), l'uranium(IV), le plutonium(III), le neptunium(III), l'américium(III) et le curium(III).

L'invention a encore pour objet un procédé de production à l'état métallique d'au moins un élément chimique choisi parmi les terres rares et les actinides, par réduction électrolytique dans un milieu de sels fondus, lequel procédé comprend les étapes suivantes :

> i) sélectionner un ensemble de conditions opératoires par un procédé tel que précédemment défini, ces conditions opératoires étant la composition qualitative du milieu, la concentration de l'élément chimique dans le milieu, la température du milieu et la densité de courant cathodique ; et
>
> ii) réaliser la réduction électrolytique dans les conditions opératoires de l'ensemble de conditions opératoires ainsi sélectionné.

Comme précédemment, le milieu de sels fondus est, de préférence, un milieu de chlorures fondus ou de chlorofluorures fondus et :

- s'il s'agit d'un milieu de chlorures fondus, alors ce milieu comprend préférentiellement du chlorure de lithium ou du chlorure de potassium ou un mélange de ceux-ci dans un rapport massique du chlorure de lithium au chlorure de potassium qui est avantageusement de 40/60 à 50/50 et, mieux encore, de 45,5/55,5 ; tandis que
- s'il s'agit d'un milieu de chlorures fondus, alors ce milieu comprend préférentiellement un mélange de chlorure de lithium et de fluorure de lithium dans un rapport massique du chlorure de lithium au fluorure de lithium qui est avantageusement de 75/25 à 85/15 et, mieux encore, de 79,2/20,8.

Dans le cas où la réduction électrolytique est réalisée en milieu de chlorures fondus, alors toute préférence est donnée à un milieu comprenant un mélange eutectique de chlorure de lithium et de chlorure de potassium, auquel cas la réduction électrolytique de l'élément chimique est réalisée à une température qui est au moins égale au point de fusion de ce mélange eutectique (c'est-à-dire 353°C) mais qui, de préférence, ne dépasse pas 100°C au-dessus de ce point de fusion (c'est-à-dire 453°C), cette température étant idéalement de 450°C.

Dans le cas où la réduction électrolytique est réalisée en milieu de chlorofluorures fondus, alors toute préférence est donnée à un milieu comprenant un mélange eutectique de chlorure de lithium et de fluorure de lithium, auquel cas la réduction électrolytique de l'élément chimique est réalisée à une température qui est au moins égale au point de fusion de ce mélange eutectique (c'est-à-dire 500°C) mais qui, de préférence, ne dépasse pas 100°C au-dessus de ce point de fusion (c'est-à-dire 600°C), cette température étant idéalement de 550°C.

Dans tous les cas, on préfère que la concentration de l'élément chimique dans le milieu de sels fondus soit inférieure à 10 % massiques.

Comme précédemment, si l'élément chimique est choisi parmi les terres rares, alors il est, de préférence, choisi parmi le néodyme, le dysprosium, le lanthane, le praséodyme et le cérium, tandis que, s'il est choisi parmi les actinides, alors il est, de préférence, choisi parmi l'uranium(III), l'uranium(IV), le plutonium(III), le neptunium(III), l'américium(III) et le curium(III).

L'invention présente de nombreux avantages.

En effet, elle permet d'obtenir rapidement et par une technique qui est simple à mettre oeuvre et qui ne nécessite aucune analyse chimique une estimation des rendements que sont susceptibles de présenter des réductions électrolytiques de terres rares ou d'actinides en milieux de sels fondus en fonction de certaines conditions opératoires et, par là même, de sélectionner celles de ces conditions opératoires qui sont susceptibles de conduire à des rendements d'électrolyses optimisés. Elle permet également de dégager l'influence de certaines conditions opératoires (température, composition du milieu de sels fondus, ...) sur les rendements des réductions électrolytiques.

De ce fait, elle permet, outre de produire des terres rares et des actinides à l'état métallique ou des alliages de ceux-ci par réduction électrolytique en milieux de sels fondus avec des rendements bien supérieurs à ceux rapportés à ce jour dans l'état de la technique, de réaliser cette production à des températures nettement plus basses que celles utilisées dans l'état de la technique, ce qui se traduit par un gain en termes de facilité de mise en oeuvre du procédé de production des terres rares, de coût des matériaux employés dans la construction des équipements utilisés pour cette production et de longévité de ces matériaux.

En particulier, l'invention permet de produire du néodyme à l'état métallique et sous forme pure, c'est-à-dire non alliée à un métal autre qu'une terre rare, en milieu de chlorofluorures fondus et à une température supérieure ou égale à 500°C et, de préférence, de 550°C avec des rendements supérieurs à 75 %.

De manière similaire, l'invention permet de produire du dysprosium à l'état métallique et sous forme pure, en milieu de chlorures fondus ou de chlorofluorures fondus, et ce, à une température supérieure ou égale à 400°C et, de préférence, de 450°C pour un milieu de chlorures fondus, et à une température supérieure à 500°C et, de préférence, de 550°C pour un milieu de chlorofluorures fondus avec des rendements qui, dans les deux cas, sont supérieurs à 85 %.

Aussi, l'invention a-t-elle encore pour objet :

- d'une part, un procédé de production à l'état métallique de néodyme ou de dysprosium par réduction électrolytique dans un milieu de sels fondus, dans lequel le milieu de sels fondus est un milieu de chlorofluorures fondus comprenant au moins 3 % massiques de néodyme ou de dysprosium et, de préférence, de 3 % à 7 % massiques de néodyme ou de dysprosium et dans lequel la réduction électrolytique est réalisée à une température supérieure ou égale à 500°C et, de préférence, de 550°C ; et
- d'autre part, un procédé de production à l'état métallique de dysprosium par réduction électrolytique dans un milieu de sels fondus, dans lequel le milieu de sels fondus est un milieu de chlorures fondus comprenant au moins 3 % massiques de dysprosium et, de préférence, de 3 % à 7 % massiques de dysprosium et dans lequel la réduction électrolytique est réalisée à une température supérieure ou égale à 500°C et, de préférence, de 550°C.

Comme précédemment, le milieu de chlorofluorures fondus comprend, de préférence, un mélange de chlorure de lithium et de fluorure de lithium dans un rapport massique du chlorure de lithium au fluorure de lithium qui est avantageusement de 75/25 à 85/15 et, de préférence, égal à 79,2/20,8, tandis que le milieu de chlorures fondus comprend, de préférence, du chlorure de lithium ou du chlorure de potassium ou un mélange de ceux-ci dans un rapport massique du chlorure de lithium au chlorure de potassium qui est avantageusement de 40/60 à 50/50 et, de préférence, égal à 45,5/55,5.

L'invention sera mieux comprise à la lumière du complément de description qui suit et qui se réfère aux figures annexées.

Il va de soi toutefois que ce complément de description n'est donné qu'à titre d'illustration de l'objet de l'invention et ne doit en aucun cas être interprété comme une limitation de cet objet.

## BRÈVE DESCRIPTION DES FIGURES

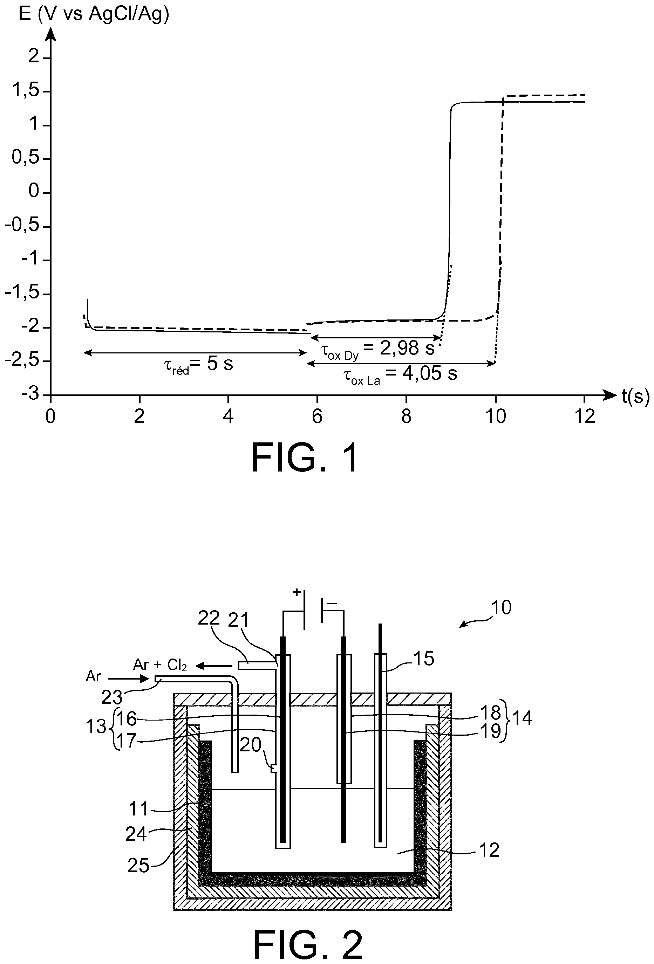

La figure 1 représente les chronopotentiogrammes inverses obtenus pour, d'une part, un milieu composé d'un mélange eutectique LiCl-KCl et de DyCl3 et comprenant 3 % massiques de dysprosium (lignes en traits pleins) et, d'autre part, un milieu composé d'un mélange eutectique LiCl-KCl et de $LaCl_3$ et comprenant 7,5 % massiques de lanthane (lignes en pointillés), à 450°C et pour une densité de courant de $\pm$ 150 A/cm$^2$ ; sur cette figure, l'axe des ordonnées correspond au potentiel de l'électrode de travail, noté E et exprimé en volts vs AgCl/Ag, tandis que l'axe des abscisses correspond au temps, noté t et exprimé en secondes.

La figure 2 est une représentation schématique de la cellule d'électrolyse, vue en coupe transversale, ayant été utilisée pour valider expérimentalement l'utilisation de la chronopotentiométrie inverse selon l'invention.

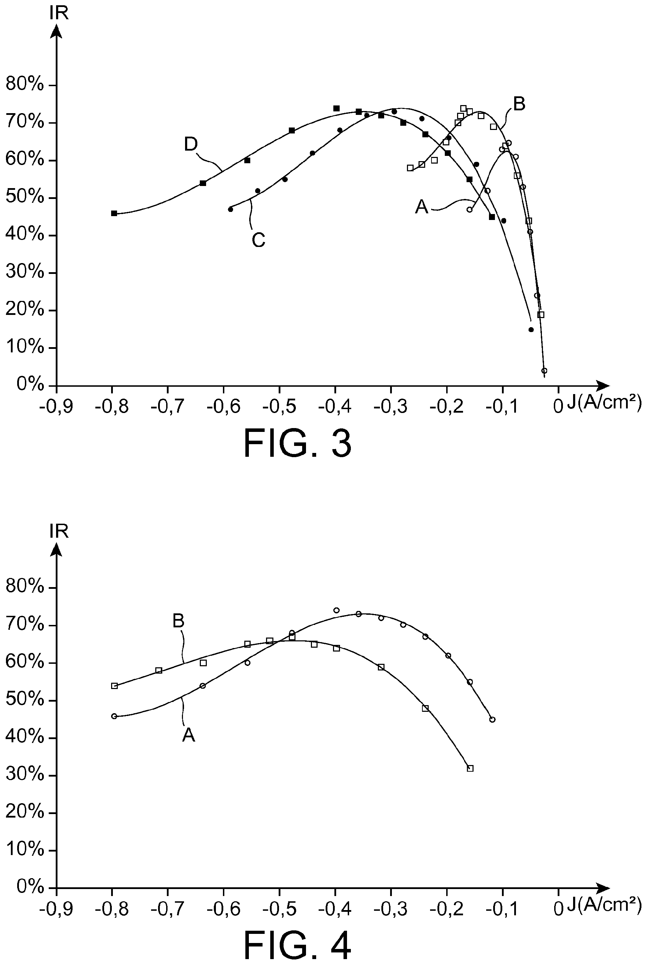

La figure 3 illustre sous la forme de courbes les indicateurs de rendements, notés IR et exprimés en %, tels qu'obtenus par chronopotentiométrie inverse pour la réduction électrolytique de néodyme à 550°C dans quatre milieux composés d'un mélange eutectique LiCl-LiF et de $NdCl_3$ et comprenant respectivement 1 % massique (courbe A), 3 % massiques (courbe B), 5 % massiques (courbe C) et 7 % massiques (courbe D) de néodyme, en fonction de la densité du courant imposé en réduction, notée J et exprimée en A/cm$^2$.

La figure 4 illustre sous la forme de courbes les indicateurs de rendement, notés IR et exprimés en %, tels qu'obtenus par chronopotentiométrie inverse pour la réduction électrolytique de néodyme à 550°C (courbe A) et à 650°C (courbe B) dans un milieu composé d'un mélange eutectique LiCl-LiF et de NdCl$_3$ et comprenant 7 % massiques de néodyme, en fonction de la densité du courant imposé en réduction, notée J et exprimée en A/cm$^2$.

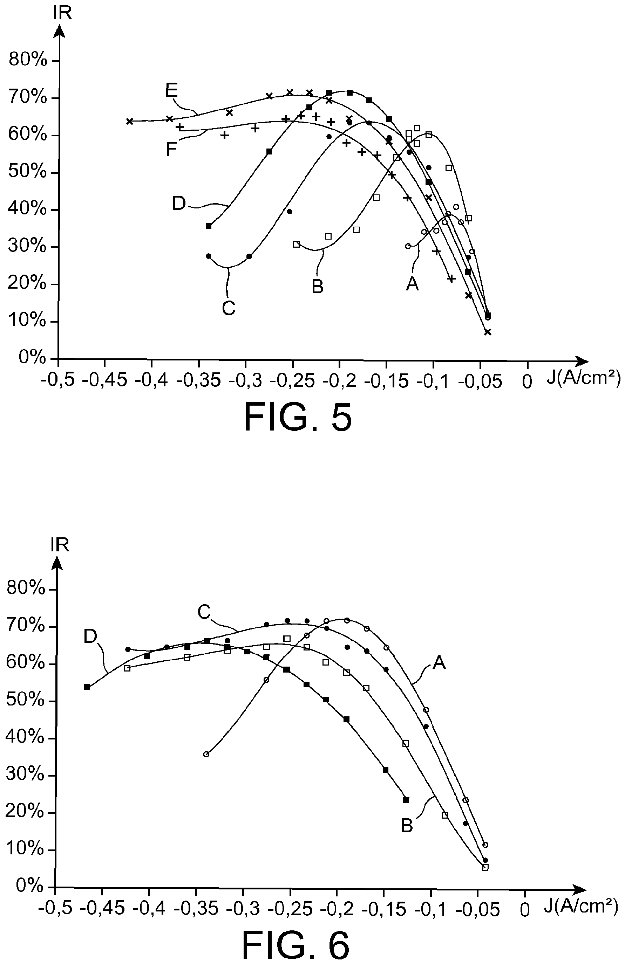

La figure 5 illustre sous la forme de courbes les indicateurs de rendements, notés IR et exprimés en %, tels qu'obtenus par chronopotentiométrie inverse pour la réduction électrolytique de dysprosium à 450°C dans six milieux composés d'un mélange eutectique LiCl-KCl et de DyCl3 et comprenant respectivement 1 % massique (courbe A), 2 % massiques (courbe B), 3 % massiques (courbe C), 4 % massiques (courbe D), 5 % massiques (courbe E) et 6 % massiques (courbe F) de dysprosium, en fonction de la densité du courant imposé en réduction, notée J et exprimée en A/cm$^2$.

La figure 6 illustre sous la forme de courbes les indicateurs de rendement, notés IR et exprimés en %, tels qu'obtenus par chronopotentiométrie inverse pour la réduction électrolytique de dysprosium à 450°C et à 500°C dans deux milieux composés d'un mélange eutectique LiCl-KCl et de DyCl3 et comprenant respectivement 4 % massiques et 5 % massiques de dysprosium, en fonction de la densité du courant imposé en réduction, notée J et exprimée en A/cm$^2$; sur cette figure, la courbe A correspond au couple de variables 450°C/4 % massiques; la courbe B correspond au couple de variables 500°C/4 % massiques ; la courbe C correspond au couple de variables 450°C/5 % massiques tandis que la courbe D correspond au couple de variables 500°C/5 % massiques.

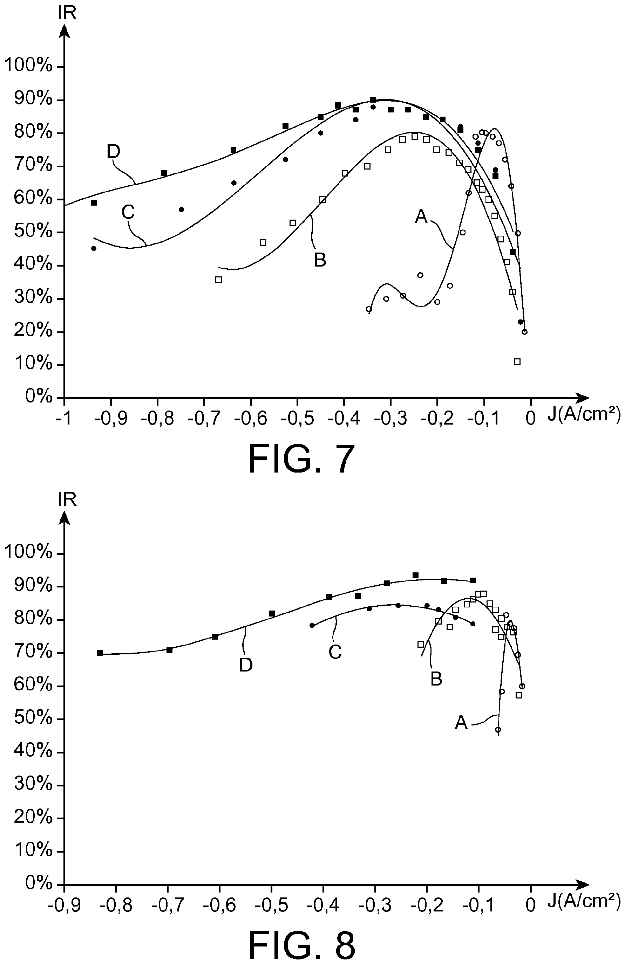

La figure 7 illustre sous la forme de courbes les indicateurs de rendement, notés IR et exprimés en %, tels qu'obtenus par chronopotentiométrie inverse pour la réduction électrolytique de dysprosium à 550°C dans quatre milieux composés d'un mélange eutectique LiCl-LiF et de DyCl3 et comprenant respectivement 2 % massique (courbe A), 3 % massiques (courbe B), 4 % massiques (courbe C) et 5 % massiques (courbe D) de dysprosium, en fonction de la densité du courant imposé en réduction, notée J et exprimée en A/cm$^2$.

La figure 8 illustre sous la forme de courbes les indicateurs de rendement, notés IR et exprimés en %, tels qu'obtenus par chronopotentiométrie inverse pour la réduction électrolytique de lanthane à 450°C dans quatre milieux composés d'un mélange eutectique LiCl-KCl et de LaCl$_3$ et comprenant respectivement 0,7 % massique (courbe A), 3,8 % massiques (courbe B), 7,5 % massiques (courbe C) et 10,8 % massiques (courbe D) de lanthane, en fonction de la densité du courant imposé en réduction, notée J et exprimée en A/cm$^2$.

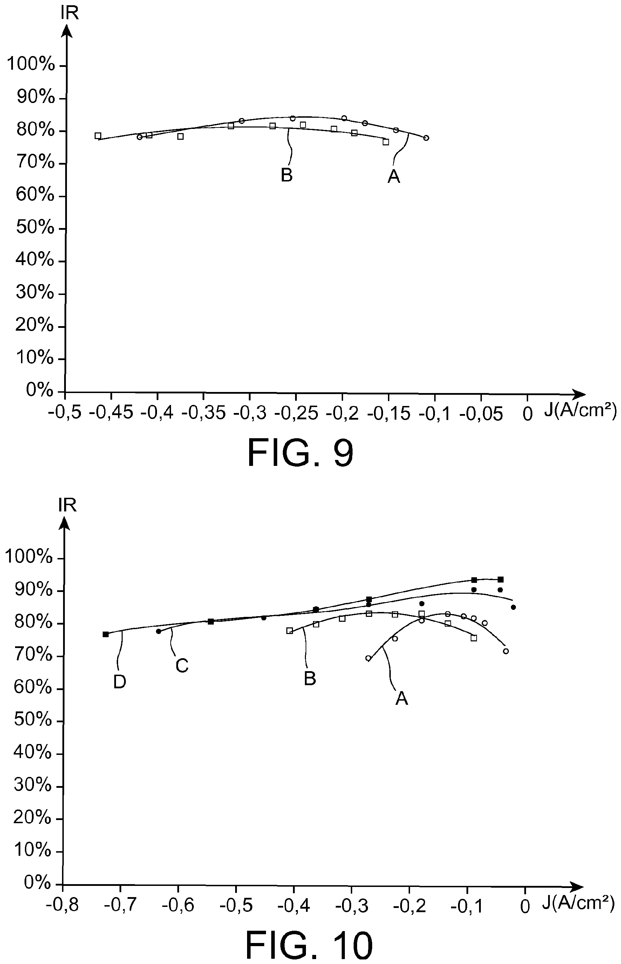

La figure 9 illustre sous la forme de courbes les indicateurs de rendement, notés IR et exprimés en %, tels qu'obtenus par chronopotentiométrie inverse pour la réduction électrolytique de lanthane à 450°C (courbe A) et à 500°C (courbe B) dans un milieu composé d'un mélange eutectique LiCl-KCl et LaCl$_3$ et comprenant 7,5 % massiques de lanthane, en fonction de la densité du courant imposé en réduction, notée J et exprimée en A/cm$^2$.

La figure 10 illustre sous la forme de courbes les indicateurs de rendement, notés IR et exprimés en %, tels qu'obtenus par chronopotentiométrie inverse pour la réduction électrolytique de lanthane et de cérium à 450°C dans quatre milieux composés d'un mélange eutectique LiCl-KCl, de LaCl$_3$ et de CeCl$_3$ et comprenant respectivement 1 % massique de lanthane et 2 % massiques de cérium (courbe A), 2 % massiques de lanthane et 3 % massiques de cérium (courbe B), 3 % massiques de lanthane et 4 % massiques de cérium (courbe C), 4 % massiques de lanthane et 4 % massiques de cérium (courbe D), en fonction de la densité du courant imposé en réduction, notée J et exprimée en A/cm$^2$.

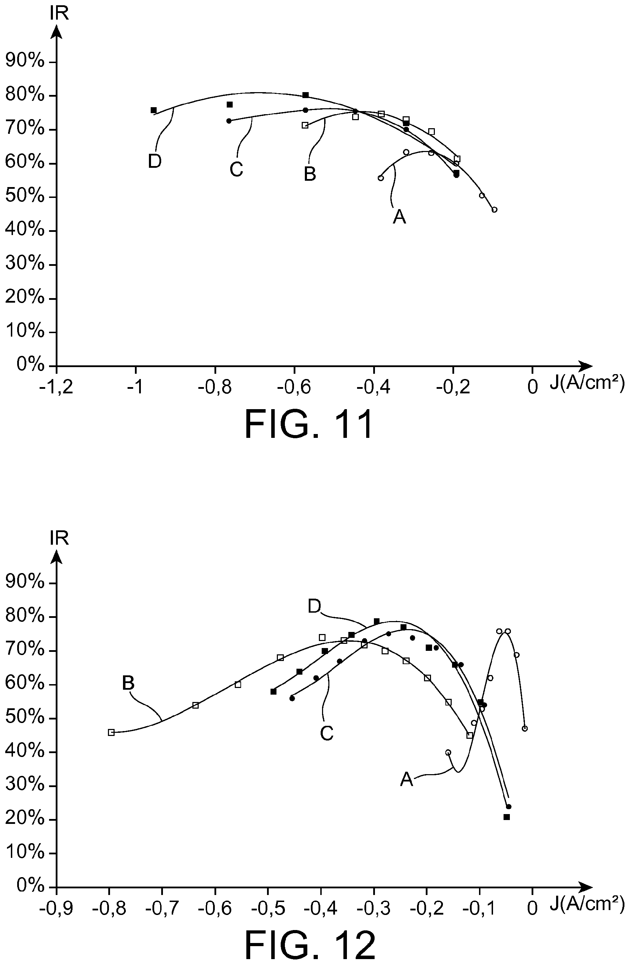

La figure 11 illustre sous la forme de courbes les indicateurs de rendement, notés IR et exprimés en %, tels qu'obtenus par chronopotentiométrie inverse pour la réduction électrolytique de lanthane, de cérium et de néodyme à 450°C dans quatre milieux composés d'un mélange eutectique LiCl-KCl, de LaCl$_3$, de CeCl$_3$ et de NdCl$_3$ et comprenant respectivement 1 % massique de lanthane, 1 % massique de cérium et 1 % massique de néodyme (courbe A), 2 % massiques de lanthane, 2 % massiques de cérium et 1 % massique de néodyme (courbe B), 3 % massiques de lanthane, 3 % massiques de cérium et 1 % massique de néodyme (courbe C), 3,5 % massiques de lanthane, 3,5 % massique de cérium et 1 % massique de néodyme (courbe D), en fonction de la densité du courant imposé en réduction, notée J et exprimée en A/cm$^2$.

La figure 12 illustre sous la forme de courbes les indicateurs de rendement, notés IR et exprimés en %, tels qu'obtenus par chronopotentiométrie inverse pour la réduction électrolytique de néodyme et/ou de dysprosium à 550°C dans quatre milieux composés d'un mélange eutectique LiCl-LiF, de NdCl$_3$ et/ou de DyCl$_3$ et comprenant respectivement 0 % massique de néodyme et 1 % massique de dysprosium (courbe A), 7 % massiques de néodyme et 0 % massique de dysprosium (courbe B), 7,1 % massiques de néodyme et 2 % massiques de dysprosium (courbe C) et 6,3 % massiques de néodyme et 1 % massique de dysprosium (courbe D), en fonction de la densité du courant imposé en réduction, notée J et exprimée en A/cm$^2$.

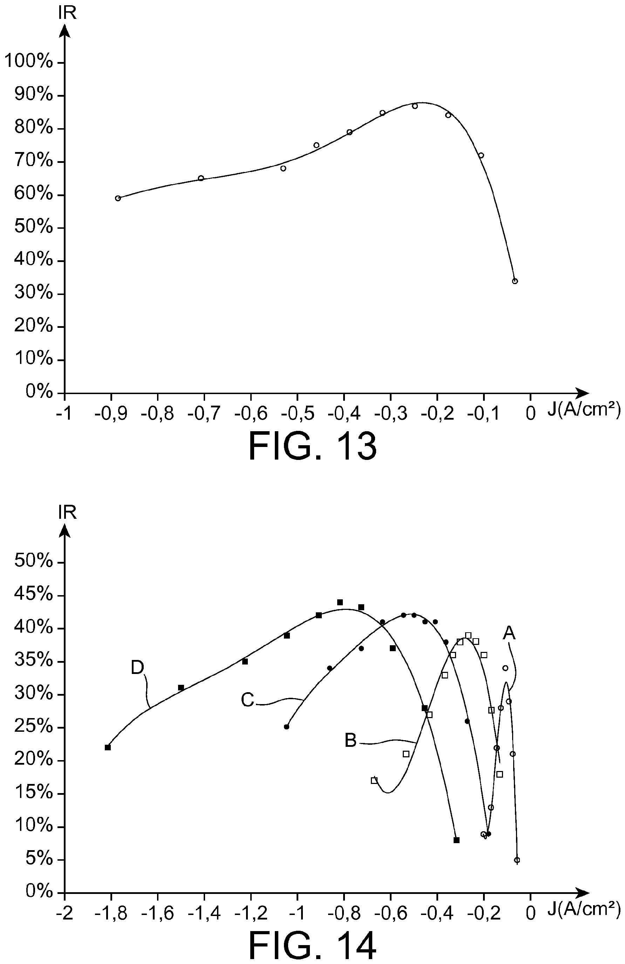

La figure 13 illustre sous la forme d'une courbe les indicateurs de rendement, notés IR et exprimés en %, tels qu'obtenus par chronopotentiométrie inverse pour la réduction électrolytique de lanthane, cérium, néodyme et praséodyme à 450°C dans un milieu composé d'un mélange eutectique LiCl-KCl, de LaCl$_3$, de CeCl$_3$, de NdCl$_3$ et

de PrCl$_3$ et comprenant 2,9 % massiques de lanthane, 3,7 % massiques de cérium, 1,1 % massique de néodyme et 0,4 % massique de praséodyme, en fonction de la densité du courant imposé en réduction, notée J et exprimée en A/cm$^2$.

La figure 14 illustre sous la forme de courbes les indicateurs de rendement, notés IR et exprimés en %, tels qu'obtenus par chronopotentiométrie inverse pour la réduction électrolytique de dysprosium à 650°C dans un milieu composé de LiCl et de DyCl3 et comprenant de 0,6 % massique (courbe A), 2,1 % massiques (courbe B), 3,9 % massiques (courbe C) et 5,7 % massiques (courbe D) de dysprosium, en fonction de la densité du courant imposé en réduction, notée J et exprimée en A/cm$^2$.

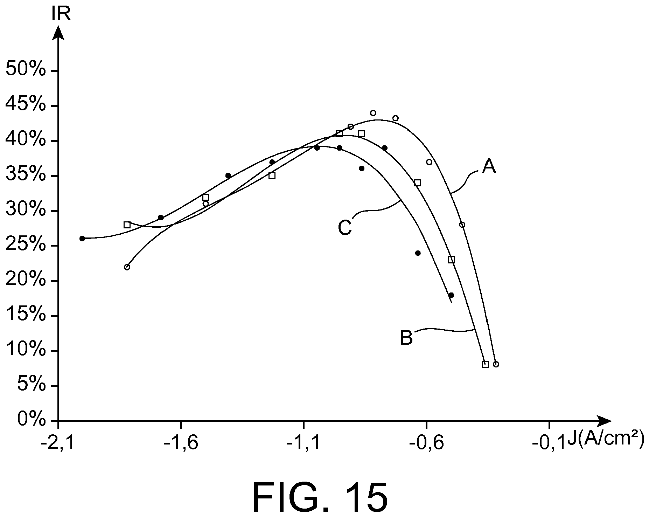

La figure 15 illustre sous la forme de courbes les indicateurs de rendement, notés IR et exprimés en %, tels qu'obtenus par chronopotentiométrie inverse pour la réduction électrolytique de dysprosium à 650°C (courbe A), 700°C (courbe B) et 750°C (courbe C) dans un milieu composé de LiCl et de DyCl$_3$ et comprenant 5,7 % massiques de dysprosium, en fonction de la densité du courant imposé en réduction, notée J et exprimée en A/cm$^2$.

## EXPOSÉ DÉTAILLÉ DE MODES DE MISE EN OEUVRE PARTICULIERS

### 1. Principe de la chronopotentiométrie inverse et de son utilisation selon l'invention :

La chronopotentiométrie inverse - ou chronopotentiométrie par inversion de courant - consiste à appliquer à une électrode de travail, qui est plongée dans un milieu comprenant une espèce électroactive, successivement un courant de réduction bref (< 10 s) et un courant d'oxydation de même intensité I et à enregistrer les variations de potentiel E de l'électrode de travail au cours du temps.

Ces variations de potentiel sont liées au changement de la concentration de l'espèce électroactive au niveau de l'électrode de travail.

Leur représentation graphique en fonction du temps est appelé « chronopotentiogramme inverse ».

À titre d'exemples, la figure 1 montre les chronopotentiogrammes inverses obtenus pour deux milieux de sels fondus comprenant un sel de terre rare, à savoir :

- d'une part, un milieu composé d'un mélange eutectique LiCl-KCl et de DyCl$_3$ et comprenant 3 % massiques de dysprosium, à 450°C (lignes en traits pleins), et
- d'autre part, un milieu composé d'un mélange eutectique LiCl-KCl et de LaCl$_3$ et comprenant 7,5 % massiques de lanthane, également à 450°C (lignes en pointillés),

et ce, en utilisant une cellule à 3 électrodes (une électrode de travail en tungstène, une contre-électrode en molybdène et une électrode de référence en chlorure d'argent/argent) et une densité de courant J (correspondant au rapport entre l'intensité du courant I et la surface de l'électrode de travail) de ± 0,150 A/cm$^2$.

Comme visible sur cette figure, chaque chronopotentiogramme inverse comprend trois paliers qui correspondent successivement à une réduction de la terre rare (Dy ou La) du degré d'oxydation +3 au degré d'oxydation 0 (cette réduction pouvant se faire en une ou deux étapes selon la terre rare: une étape pour La, deux étapes pour Dy), à une ré-oxydation de cette terre rare du degré d'oxydation 0 au degré d'oxydation +3 (cette ré-oxydation pouvant également se faire en une ou deux étapes selon la terre rare) et à une oxydation des ions chlorures en chlore gazeux.

Un chronopotentiogramme inverse permet de déterminer deux « temps de transition », notés respectivement $\tau_{réd}$ et $\tau_{ox}$, qui correspondent aux temps nécessaires pour que la concentration de l'espèce électroactive devienne nulle au voisinage de l'électrode de travail en réduction ($\tau_{réd}$) et en oxydation ($\tau_{ox}$).

Lorsque la diffusion des ions est linéaire et que le temps imposé pour la réduction est suffisamment court pour négliger la diffusion des ions du milieu vers la couche de diffusion, les temps de transition sont directement reliés au courant appliqué à l'électrode de travail ainsi qu'à la concentration de l'espèce électroactive dans le milieu par la loi de Sand :

$$\frac{J\sqrt{\tau}}{C} = 0{,}5 \times \pi^{0,5} \times nFD^{0,5}$$

dans laquelle :

J représente la densité de courant en A/m$^2$,
$\tau$ représente le temps de transition en secondes,
C représente la concentration de l'espèce électroactive en mol/m$^3$,
n représente le nombre d'électrons échangés dans la réaction,

F représente la constante de Faraday en C.mol$^{-1}$, et
D représente le coefficient de diffusion en m$^2$/s.

À partir des temps de transition, il est possible de déterminer un rendement faradique, noté R$_f$, en appliquant la formule suivante :

$$R_f = \frac{I \times \tau_{ox}}{I \times \tau_{réd}} \times 100$$

dans laquelle I représente l'intensité du courant (en ampères) appliqué à l'électrode de travail.
Comme cette intensité de courant est la même en réduction et en oxydation, R$_f$ est donc égal à ($\tau_{ox}$/$\tau_{réd}$) x 100.
Conformément à l'invention, c'est ce rendement faradique que l'on utilise comme un indicateur du rendement susceptible d'être obtenu lors d'une réduction électrolytique à l'état métallique d'un élément chimique dans un milieu de sels fondus qui serait réalisée dans les mêmes conditions de composition qualitative du milieu de sels fondus, de concentration de cet élément dans le milieu de sels fondus, de température du milieu de sels fondus et de densité de courant cathodique que celles utilisées pour établir le chronopotentiogramme à partir duquel le rendement faradique est déterminé.
Si l'on revient à la figure 1, on constate que les temps de transition $\tau_{réd}$ sont de 5 s pour le dysprosium et le lanthane tandis que les temps de transition $\tau_{ox}$ sont respectivement de 2,98 s pour le dysprosium et de 4,05 s pour le lanthane.
R$_f$ est donc égal à :

- 59,60 % pour le dysprosium, ce qui donne un indicateur de rendement de 59,60 % pour une réduction électrolytique du dysprosium qui serait réalisée dans un milieu composé d'un mélange eutectique LiCl-KCl et de DyCl$_3$, avec une concentration en dysprosium de 3 % massiques, une température du milieu de 450°C et une densité de courant cathodique de -0,150 A/cm$^2$; et à
- 81 % pour le lanthane, ce qui donne un indicateur de rendement de 81% pour une réduction électrolytique du lanthane qui serait réalisée dans un milieu composé d'un mélange eutectique LiCl-KCl et de LaCl$_3$, avec une concentration en lanthane de 7,5 % massiques, une température de 450°C et une densité de courant cathodique de -0,150 A/cm$^2$.

Si l'on soumet ces deux mêmes milieux à des séries de chronopotentiométries inverses dans lesquelles on fait varier la concentration de la terre rare (Dy ou La) et/ou la température du milieu de sels fondus et/ou la densité de courant cathodique, il est alors possible de déterminer à partir des chronopotentiogrammes inverses résultants un indicateur de rendement pour chacune de ces variations et de sélectionner ensuite, en fonction des indicateurs de rendement obtenus, les conditions opératoires qui sont susceptibles de conduire à des réductions électrolytiques du dysprosium et du lanthane en milieux LiCl-KCl aux rendements optimisés.
Et c'est sur ce principe qu'est basée l'utilisation selon l'invention de la chronopotentiométrie inverse.
Il est à noter que toutes les chronopotentiométries inverses qui sont rapportées aux points 3 à 10 qui suivent ont été réalisées en utilisant la cellule à 3 électrodes décrite ci-avant.

**2. Conditions de validation expérimentale de l'utilisation selon l'invention de la chronopotentiométrie inverse** :

L'utilisation selon l'invention de la chronopotentiométrie inverse a été validée expérimentalement par des réductions électrolytiques de terres rares qui sont rapportées aux points 3 à 10 qui suivent et qui ont toutes été réalisées dans des milieux de chlorures fondus LiCl ou LiCl-KCl, ou de chlorofluorures fondus LiCl-LiF, au moyen de la cellule d'électrolyse 10 montrée sur la figure 2.
Comme visible sur cette figure, la cellule d'électrolyse 10 comprend un premier creuset 11 dans lequel est placé un milieu de sels fondus 12, une électrode positive 13, ou anode, une électrode négative 14, ou cathode, et une électrode de référence 15 qui plongent toutes les trois dans le milieu 12.
Le creuset 11 est en alumine pour les milieux de chlorures fondus et en carbone vitreux pour les milieux de chlorofluorures fondus.
L'anode 13 est constituée d'une tige 16 en carbone vitreux de 3 mm ou 10 mm de diamètre, gainée d'un tube 17 qui est en alumine pour les milieux de chlorures fondus et en nitrure de bore pour les milieux de chlorofluorures fondus tandis que la cathode 14 est constituée d'une tige 18 en molybdène de 3 ou 5 mm de diamètre, partiellement gainée d'un tube 19 qui est en alumine quel que soit le milieu de sels fondus utilisé.
L'électrode de référence 15 est une électrode en chlorure d'argent/ argent pour les milieux LiCl-KCl et une électrode inerte (molybdène, tungstène ou platine) pour les milieux LiCl-LiF et LiCl.

Le tube 17 de l'anode est percé de deux orifices : un premier orifice 20 qui se situe sensiblement à mi-hauteur de ce tube de sorte à être à proximité de la surface du milieu 12 tout en étant au-dessus de cette surface, et un deuxième orifice 21 qui se situe à l'extrémité supérieure du tube 16 et qui est relié à un conduit 22.

La cellule 10 comprend de plus un conduit d'arrivée d'argon 23 qui est relié à un réservoir d'argon extérieur à cette cellule (non représenté sur la figure 2) et qui permet, conjointement avec les orifices 20 et 21 du tube 16 de l'anode 13, d'assurer, en condition de réduction électrolytique, une circulation d'argon au-dessus de la surface du milieu 12, ce balayage étant destiné à extraire du creuset 11 le chlore gazeux qui se forme à l'anode 13 et, par là même, à éviter une chute du rendement faradique qui serait liée à une recombinaison de ce chlore avec le métal ou l'alliage métallique s'étant déposé à la cathode 14.

Le creuset 11 est placé dans un contre-creuset 24, qui est en quartz ou pyrex et qui est, lui-même, placé dans un réacteur 25, également en quartz, lequel est muni d'un couvercle 26 en quartz qui est traversé par l'anode 13, la cathode 14, l'électrode de référence 15 et le conduit d'arrivée d'argon 23.

L'ensemble formé par le creuset 11, le contre-creuset 24 et le réacteur 25 est placé dans un four, non représenté sur la figure 2.

Les électrolyses ont été réalisées en utilisant un courant cathodique compris entre -0,100 A et -0,900 A, ce qui correspond à une densité de courant cathodique (ou d.c.c) comprise entre -0,055 A/cm$^2$ et -0,300 A/cm$^2$ et à une densité de courant anodique (ou d.c.a) comprise entre -0,020 A/cm$^2$ et -0,350 A/cm$^2$. La tension aux bornes des électrodes (ou $\Delta$E) était située entre 3,5 V et 5,6 V. La durée des électrolyses, correspondant à la production de 1 g de l'élément chimique à l'état métallique, a varié de 1980 s à 10 035 s.

À la fin de chaque électrolyse, le dépôt métallique s'étant formé sur la cathode a été immédiatement égoutté pendant 15 mn à chaud au-dessus du creuset 11 afin de limiter la quantité de sel présente dans ce dépôt et, par là même, le risque d'une dissolution du métal par le sel. Il a ensuite été pesé (masse brute).

Puis, ce dépôt a été dissous dans de l'acide nitrique 2 M et, après dilution dans de l'eau, chaque type de cation (Li ou Li/K, TR) présent dans la solution résultante a été dosé par spectrométrie d'émission atomique par torche à plasma (ou ICP-AES), le dosage des cations autres que ceux de la terre rare (c'est-à-dire Li ou Li/K selon le milieu de sels fondus) permettant de calculer la quantité de sel contenue dans le dépôt.

Les dépôts métalliques obtenus étant relativement dendritiques, une quantité non négligeable de sel a été entraînée avec le métal. De ce fait, deux types de rendement en métal ont été calculés :

- un rendement dit « brut », noté $R_b$, qui correspond à l'hypothèse selon laquelle le sel contenu dans le dépôt serait complètement appauvri en sel de terre rare et qu'en conséquence, la quantité de terre rare dosée par ICP-AES après dissolution du dépôt dans $HNO_3$ proviendrait uniquement de la dissolution de cette terre rare à l'état métallique ; ce rendement brut a été calculé en appliquant la formule suivante :

$$R_b = \frac{m_{TR\ ICP-AES}}{m_{TR\ théorique}}$$

dans laquelle :

$m_{TR\ ICP-AES}$ correspond à la masse de terre rare dosée par ICP-AES après dissolution du dépôt dans $HNO_3$ en g ; et

$m_{TR\ théorique}$ correspond à la masse de terre rare théorique en g, qui est, elle-même, calculée en appliquant la loi de Faraday (i.e. Q = n x F x z = i x t, avec n = le nombre de moles de terre rare à élaborer, F = la constante de Faraday (96 500 C/mol), z = le nombre d'électrons échangés, i = le courant imposé au cours de l'électrolyse, et t = la durée de l'électrolyse) en considérant un rendement de 100% ;

- un rendement dit « révisé », noté $R_v$, qui correspond à l'hypothèse plus pessimiste que la précédente, selon laquelle le sel contenu dans le dépôt contiendrait une quantité non négligeable de sel de terre rare représentative de la composition du sel présent dans le creuset en début d'électrolyse ; ce rendement révisé a été calculé en appliquant la formule suivante :

$$R_v = \frac{m_{TR\ ICP-AES} - m_{TR\ contenu\ dans\ le\ sel}}{m_{TR\ théorique}}$$

**3. Production de néodyme métallique en milieux de chlorofluorures LiCl-LiF :**

On a déterminé par chronopotentiométrie inverse les indicateurs de rendements d'une réduction électrolytique de néodyme à 550°C dans quatre milieux composés d'un mélange eutectique LiCl-LiF et de $NdCl_3$ et comprenant respectivement 1 %, 3 %, 5 % et 7 % massiques de néodyme, en faisant varier la densité de courant en réduction de -0,025 $A/cm^2$ à -0,8 $A/cm^2$.

On a également déterminé les indicateurs de rendement d'une réduction électrolytique de néodyme à 650°C dans le milieu LiCl-LiF-$NdCl_3$ à 7 % massiques de néodyme, en faisant varier la densité de courant en réduction de -0,1 $A/cm^2$ à -0,8 $A/cm^2$, pour comparer ces indicateurs de rendement à ceux obtenus pour la même concentration massique en néodyme mais à 650°C.

Ont ainsi été établies les courbes des figures 3 et 4 qui présentent les indicateurs de rendement obtenus en fonction de la densité du courant imposé en réduction et qui montrent que les indicateurs de rendement les plus élevés sont obtenus pour une concentration massique en néodyme comprise entre 3 % et 7 % (courbes B, C et D de la figure 3) et, lorsque la concentration massique en néodyme est de 7%, pour la température de 550°C (courbe A de la figure 4).

Ainsi, d'après ces figures, la production de néodyme métallique par réduction électrolytique dans un milieu composé d'un mélange eutectique LiCl-LiF et de $NdCl_3$ devrait être réalisée, de préférence, avec une concentration massique en néodyme de 3 % à 7 % et à 550°C pour obtenir des rendements avoisinant les 75 %.

On a donc ensuite réalisé des électrolyses à 550°C dans un bain composé de 500 grammes d'un mélange eutectique LiCl-LiF et de $NdCl_3$ et comprenant de 5,8 % à 7,6 % massiques de néodyme, en utilisant une d.c.c de -0,095 $A/cm^2$ à -0,360 $A/cm^2$, une d.c.a de 0,020 $A/cm^2$ à 0,085 $A/cm^2$, un $\Delta E$ de 4 V à 4,7 V et une durée d'électrolyse de 1606 s à 6690 s (correspondant à l'élaboration théorique de 1 g de métal).

Le tableau I ci-après présente, pour chacune des électrolyses réalisées, la concentration en néodyme du bain d'électrolyse, notée [Nd], les valeurs de d.c.c, de d.c.a et de $\Delta E$ utilisées, la durée de l'électrolyse, notée t, la masse du dépôt brut, notée $m_{dépôt\ brut}$, la masse de néodyme électrodéposé (c'est-à-dire la masse de Nd dosée par ICP-AES après dissolution du dépôt dans $HNO_3$), notée $m_{Nd}$, les valeurs de $R_b$ et de $R_v$ obtenues ainsi que l'IR correspondant à cette électrolyse tel qu'établi par chronopotentiométrie inverse.

Tableau I

| [Nd] (% massiques) | d.c.c ($A/m^2$) | d.c.a ($A/m^2$) | $\Delta E$ (V) | t (s) | $m_{dépôt\ brut}$ (g) | $m_{Nd}$ (g) | $R_b$ ($R_v$) | IR |
|---|---|---|---|---|---|---|---|---|
| 7,6 | -0,095 | -0,020 | 4,0 | 6 690 | 2,32 | 0,873 | **87 % (75 %)** | 74 % |
| 6,3 | -0,290 | -0,060 | 4,5 | 2 230 | 3,01 | 0,975 | **97 % (85 %)** | 74 % |
| 6,1 | -0,180 | -0,045 | 4,2 | 3 185 | 2,84 | 0,794 | **79 % (67 %)** | 74 % |
| 5,8 | -0,360 | -0,085 | 4,7 | 16 06 | 3,93 | 0,922 | **92 % (75 %)** | 74 % |

Ce tableau montre que les conditions opératoires dans lesquelles ont été réalisées les électrolyses ont permis d'obtenir du néodyme à l'état de métal avec des rendements bruts allant de 79 % à 97%, ce qui correspond à des rendements révisés allant de 67 % à 85 %, validant ainsi l'utilisation de la chronopotentiométrie inverse comme outil de sélection des conditions opératoires d'une réduction électrolytique.

Il est à noter que les rendements présentés dans le tableau I sont beaucoup plus élevés que le rendement obtenu dans la référence **[3]** pour la production de néodyme métallique pur à 850°C dans le même type de milieu de sels fondus puisque ce rendement est inférieur à 40 %. Au vu de la figure 4, cette différence de rendements apparaît être liée à la température que présente le milieu de chlorures fondus lors de l'électrolyse.

**4. Production de dysprosium métallique en milieux de chlorures LiCl-KCl :**

On a déterminé par chronopotentiométrie inverse les indicateurs de rendements d'une réduction électrolytique de dysprosium à 450°C dans six milieux composés d'un mélange eutectique LiCl-KCl et de $DyCl_3$ et comprenant respectivement 1 %, 2 %, 3 %, 4 %, 5 % et 6 % massiques de dysprosium, en faisant varier la densité de courant en réduction de -0,05 $A/cm^2$ à -0,425 $A/cm^2$.

On a également déterminé les indicateurs de rendement d'une réduction électrolytique de dysprosium à 500°C dans deux milieux composés d'un mélange eutectique LiCl-KCl et de $DyCl_3$ et comprenant respectivement 4 % et 5 % massiques de dysprosium, en faisant varier la densité de courant en réduction de -0,05 $A/cm^2$ à -0,45 $A/cm^2$, pour comparer ces indicateurs de rendement à ceux obtenus pour les mêmes concentrations massiques en dysprosium mais à 450°C.

Ont ainsi été établies les courbes des figures 5 et 6 qui présentent les indicateurs de rendement obtenus en fonction de la densité du courant imposé en réduction et qui montrent que les indicateurs de rendement les plus élevés sont obtenus pour une concentration massique en dysprosium comprise entre 4 % et 6 % (courbes D, E et F de la figure 5) et, lorsque la concentration massique en dysprosium est de 4% ou de 5%, pour la température de 450°C (courbes A et C de la figure 4).

Ainsi, d'après ces figures, la production de dysprosium métallique par réduction électrolytique dans un milieu composé d'un mélange eutectique LiCl-KCl et de DyCl3 devrait être réalisée, de préférence, avec une concentration massique en dysprosium de 4 % à 6 % et à 450°C pour obtenir des rendements avoisinant les 70 %.

On a donc ensuite réalisé des électrolyses à 450°C dans un bain composé de 500 grammes d'un mélange eutectique LiCl-KCl et de DyCl$_3$ et comprenant de 4,1 % à 6,2 % massiques de dysprosium, en utilisant une d.c.c de -0,055 A/cm$^2$ à -0,300 A/cm$^2$, une d.c.a de 0,015 A/cm$^2$ à 0,070 A/cm$^2$, un ΔE de 4,2 V à 5,1 V et une durée d'électrolyse de 6 000 s à 9 000 s (correspondant à l'élaboration théorique de 1 g de métal).

Le tableau II ci-après présente, pour chacune des électrolyses réalisées, la concentration en dysprosium du bain d'électrolyse, notée [Dy], les valeurs de d.c.c, de d.c.a et de ΔE utilisées, la durée de l'électrolyse, notée t, la masse du dépôt brut, notée $m_{dépôt\ brut}$, la masse de dysprosium électrodéposé, notée $m_{Dy}$, les valeurs de $R_b$ et de $R_v$ obtenues ainsi que l'IR correspondant à cette électrolyse tel qu'établi par chronopotentiométrie inverse.

Tableau II

| [Dy] (% massiques) | d.c.c (A/m$^2$) | d.c.a (A/m$^2$) | ΔE (V) | t (s) | $m_{dépôt\ brut}$ (g) | $M_{Dy}$ (g) | $R_b$ ($R_v$) | IR |
|---|---|---|---|---|---|---|---|---|
| 6,2 | -0,300 | -0,070 | 5,1 | 1 980 | 2,18 | 0,895 | **90 % (81 %)** | 64 % |
| 5,1 | -0,055 | -0,020 | 4,2 | 3 565 | 1,99 | 0,890 | **89 % (83 %)** | 70 % |
| 4,4 | -0,240 | -0,070 | 5,0 | 1 980 | 2,98 | 0,930 | **93 % (83 %)** | 70 % |
| 4,1 | -0,165 | -0,070 | 4,8 | 1 980 | 2,39 | 0,925 | **93 % (86 %)** | 70 % |

Ce tableau montre que les conditions opératoires dans lesquelles ont été réalisées les électrolyses ont permis d'obtenir du dysprosium à l'état de métal avec des rendements bruts allant de 89 % à 93 %, ce qui correspond à des rendements révisés allant de 81 % à 86 %, validant, là également, l'utilisation de la chronopotentiométrie inverse comme outil de sélection des conditions opératoires d'une réduction électrolytique.

Il est à noter que les rendements présentés dans le tableau II sont beaucoup plus élevés que le rendement annoncé dans la référence **[1]** pour la production de néodyme métallique pur à 820 ± 20°C dans le même type de milieu de sels fondus puisque ce rendement n'est que de l'ordre de 30 %.

**5. Production de dysprosium métallique en milieux de chlorofluorures LiCl-LiF :**

On a déterminé par chronopotentiométrie inverse les indicateurs de rendements d'une réduction électrolytique de dysprosium à 550°C dans quatre milieux composés d'un mélange eutectique LiCl-LiF et de DyCl$_3$ et comprenant respectivement 2 %, 3 %, 4 % et 5 % massiques de dysprosium, en faisant varier la densité de courant en réduction de -0,02 A/cm$^2$ à -0,95 A/cm$^2$.

Ont ainsi été établies les courbes de la figure 7 qui présentent les indicateurs de rendement obtenus en fonction de la densité du courant imposé en réduction et qui montrent que les indicateurs de rendement les plus élevés sont obtenus pour une concentration massique en dysprosium comprise entre 4 % et 5 % (courbes C et D de la figure 7).

Ainsi, d'après cette figure, la production de dysprosium métallique par réduction électrolytique à 550°C dans un milieu composé d'un mélange eutectique LiCl-LiF et de DyCl3 devrait être réalisée, de préférence, avec une concentration massique en dysprosium de 4 % à 5 % pour obtenir des rendements avoisinant les 90 %.

On a donc ensuite réalisé des électrolyses à 550°C dans un bain composé de 90 grammes d'un mélange eutectique LiCl-LiF et de DyCl$_3$ et comprenant de 4 % à 5,3 % massiques de dysprosium, en utilisant une d.c.c de -0,080 A/cm$^2$ à -0,210 A/cm$^2$, une d.c.a de 0,160 A/cm$^2$ à 0,280 A/cm$^2$, un ΔE de 4,2 V à 5,2 V et une durée d'électrolyse de 3 562 s à 5 938 s (correspondant à l'élaboration théorique de 1 g de métal).

Le tableau III ci-après présente, pour chacune des électrolyses réalisées, la concentration en dysprosium du bain d'électrolyse, notée [Dy], les valeurs de d.c.c, de d.c.a et de ΔE utilisées, la durée de l'électrolyse, notée t, la masse du dépôt brut, notée $m_{dépôt\ brut}$, la masse de dysprosium électrodéposé, notée $m_{Dy}$, les valeurs de $R_b$ et de $R_v$ obtenues ainsi que l'IR correspondant à cette électrolyse tel qu'établi par chronopotentiométrie inverse.

Tableau III

| [Dy] (% massiques) | d.c.c (A/m$^2$) | d.c.a (A/m$^2$) | $\Delta$E (V) | t (s) | m$_{dépôt\ brut}$ (g) | M$_{Dy}$ (g) | **R$_b$ (R$_v$)** | IR |
|---|---|---|---|---|---|---|---|---|
| 5,3 | -0,080 | -0,160 | 4,2 | 5 938 | 2,70 | 0,932 | **93 % (84 %)** | 90 % |
| 5,3 | -0,140 | -0,220 | 4,6 | 4 453 | 2,53 | 0,960 | **96 % (87 %)** | 90 % |
| 4,3 | -0,160 | -0,220 | 5,1 | 4 453 | 2,90 | 0,974 | **97 % (89 %)** | 90 % |
| 4,0 | -0,210 | -0,280 | 5,2 | 3 562 | 2,90 | 0,946 | **95 % (86 %)** | 90 % |

Ce tableau montre que les conditions opératoires dans lesquelles ont été réalisées les électrolyses ont permis d'obtenir du dysprosium à l'état de métal avec des rendements bruts allant de 93 % à 97 %, ce qui correspond à des rendements révisés allant de 84 % à 89%, validant, là aussi, l'utilisation de la chronopotentiométrie inverse comme outil de sélection des conditions opératoires d'une réduction électrolytique.

**6. Production de lanthane métallique en milieux de chlorures LiCl-KCl :**

On a déterminé par chronopotentiométrie inverse les indicateurs de rendements d'une réduction électrolytique de lanthane à 450°C dans quatre milieux composés d'un mélange eutectique LiCl-KCl et de LaCl$_3$ et comprenant respectivement 0,7%, 3,8%, 7,5% et 10,8% massiques de lanthane, en faisant varier la densité de courant en réduction de -0,020 A/cm$^2$ à -0,85 A/cm$^2$.

On a également déterminé les indicateurs de rendement d'une réduction électrolytique de lanthane à 500°C dans le milieu LiCl-KCl-LaCl$_3$ à 7,5 % massiques de lanthane, en faisant varier la densité de courant en réduction de -0,10 A/cm$^2$ à -0,465 A/cm$^2$, pour comparer ces indicateurs de rendement à ceux obtenus pour la même concentration massique en lanthane mais à 450°C.

Ont ainsi été établies les courbes des figures 8 et 9 qui présentent les indicateurs de rendement obtenus en fonction de la densité du courant imposé en réduction et qui montrent que les indicateurs de rendement les plus élevés sont obtenus pour une concentration massique en lanthane comprise entre 3,6 % et 10,8 % (courbes B, C et D de la figure 8) et, lorsque la concentration massique en lanthane est de 7,5 %, pour la température de 450°C (courbe A de la figure 9).

Ainsi, d'après ces figures, la production de lanthane métallique par réduction électrolytique dans un milieu composé d'un mélange eutectique LiCl-KCl et de LaCl$_3$ devrait être réalisée, de préférence, avec une concentration massique en lanthane de 3,6 % à 10,8 % et à 450°C pour obtenir des rendements avoisinant les 93 %.

On a ensuite réalisé des électrolyses à 450°C dans un bain composé de 100 grammes d'un mélange eutectique LiCl-KCl et de LaCl$_3$ et comprenant de 2,1 % à 10,7 % massiques de lanthane, en utilisant une d.c.c de -0,120 A/cm$^2$ à -0,220 A/cm$^2$, une d.c.a de 0,220 A/cm$^2$ à 0,350 A/cm$^2$, un $\Delta$E de 4 V ou proche de 4 V et une durée d'électrolyse de 3 320 s à 5 211 s (correspondant à l'élaboration théorique de 1 g de métal).

Le tableau IV ci-après présente, pour chacune des électrolyses réalisées, la concentration en lanthane du bain d'électrolyse, notée [La], les valeurs de d.c.c, de d.c.a et de $\Delta$E utilisées, la durée de l'électrolyse, notée t, la masse du dépôt brut, notée m$_{dépôt\ brut}$, la masse de lanthane électrodéposé, notée m$_{La}$, les valeurs de R$_b$ et de R$_v$ obtenues ainsi que l'IR correspondant à cette électrolyse tel qu'établi par chronopotentiométrie inverse.

Tableau IV

| [La] (% massiques) | d.c.c (A/m$^2$) | d.c.a (A/m$^2$) | $\Delta$E (V) | t (s) | m$_{dépôt\ brut}$ (g) | m La (g) | **R$_b$ (R$_v$)** | IR |
|---|---|---|---|---|---|---|---|---|
| 10,7 | -0,130 | 0,220 | 4,0 | 3 525 | 2,48 | 0,908 | **91 % (76 %)** | 94 % |
| 10,0 | -0,130 | 0,220 | 4,0 | 5 211 | 3,32 | 1,030 | **103 % (82 %)** | 90 % |
| 3,2 | -0,120 | 0,350 | 4,0 | 3 320 | 3,3 | 0,933 | **93 % (87 %)** | 88 % |
| 2,1 | -0,220 | 0,260 | 4,2 | 4 416 | 3,01 | 0,952 | **95 % (86 %)** | 85 % |

Ce tableau montre que le lanthane est une terre rare qui se dépose bien à l'état métallique par réduction électrolytique, sans complications chimiques contrairement au néodyme et, dans une moindre mesure, au dysprosium. Le rendement brut supérieur à 100% s'explique par la présence d'une quantité importante de sel dans le dépôt qui induit une difficulté analytique pour obtenir un rendement précis (d'où les rendements bruts et révisés, le rendement révisé n'étant qu'une indication, la plus pessimiste puisqu'il est basé sur l'hypothèse que le sel emprisonné dans le dépôt contient la même proportion de sel de terre rare que le bain avant électrolyse alors que le sel emprisonné dans le dépôt doit en principe s'appauvrir en sel de terre rare au fur et à mesure de l'électrolyse).

**7. Production d'un alliage métallique lanthane-cérium en milieux de chlorures LiCl-KCl :**

On a déterminé par chronopotentiométrie inverse les indicateurs de rendements d'une réduction électrolytique de lanthane et de cérium à 450°C dans quatre milieux composés d'un mélange eutectique LiCl-KCl, de $LaCl_3$ et de $CeCl_3$ et comprenant respectivement :

- 1 % massique de lanthane et 2 % massiques de cérium,
- 2 % massiques de lanthane et 3 % massiques de cérium,
- 3 % massiques de lanthane et 4 % massiques de cérium, et
- 4 % massiques de lanthane et 4 % massiques de cérium,

en faisant varier la densité de courant en réduction de -0,025 $A/cm^2$ à -0,730 $A/cm^2$.

Ont ainsi été établies les courbes de la figure 10 qui présentent les indicateurs de rendement obtenus en fonction de la densité du courant imposé en réduction et qui montrent que les indicateurs de rendement les plus élevés sont obtenus pour des concentrations massiques en lanthane et en cérium comprises entre 3 % et 4 % (courbes C et D de la figure 10).

Ainsi, d'après cette figure, la production d'un alliage métallique La-Ce par réduction électrolytique à 450°C dans un milieu composé d'un mélange eutectique LiCl-KCl, de $LaCl_3$ et de $CeCl_3$ devrait être réalisée avec, de préférence, des concentrations massiques en lanthane et en cérium de l'ordre de 3 % à 4 % pour obtenir des rendements avoisinant les 94 % même si les indicateurs de rendement sont déjà très élevés pour des concentrations massiques plus faibles (cf. la courbe A obtenue pour 1% massique de lanthane + 2% massiques de cérium).

On a ensuite réalisé des électrolyses à 450°C dans un bain composé de 100 grammes d'un mélange eutectique LiCl-KCl, de $LaCl_3$ et de $CeCl_3$ et comprenant de 3 % à 4,8 % massiques de lanthane et de 0,5 % à 3,8 % massiques de cérium, en utilisant une d.c.c de -0,100 $A/cm^2$ à -0,230 $A/cm^2$, une d.c.a de 0,180 $A/cm^2$, un $\Delta E$ de 4,6 V à 5,6 V et une durée d'électrolyse de 6 316 s (correspondant à l'élaboration théorique de 1 g d'alliage métallique).

Le tableau V ci-après présente, pour chacune des électrolyses réalisées, les concentrations en lanthane et en cérium du bain d'électrolyse, notées respectivement [La] et [Ce], les valeurs de d.c.c et de $\Delta E$ utilisées, la masse du dépôt brut, notée $m_{dépôt\ brut}$, les masses de lanthane et de cérium électrodéposés, notées respectivement $m_{La}$ et $m_{Ce}$, les valeurs de $R_b$ et de $R_v$ obtenues ainsi que l'IR correspondant à cette électrolyse tel qu'établi par chronopotentiométrie inverse.

Tableau V

| [La] [Ce] (% massiques) | d.c.c ($A/m^2$) | $\Delta E$ (V) | $m_{dépôt\ brut}$ (g) | $m_{La}$ $m_{Ce}$ (g) | $R_b$ ($R_v$) | IR |
|---|---|---|---|---|---|---|
| 4,8 3,8 | -0,100 | 5,4 | 3,76 | 0,204 0,858 | **106 % (87 %)** | 94 % |
| 4,5 2,4 | -0,230 | 4,7 | 4,17 | 0,384 0,702 | **109 % (90 %)** | 94 % |
| 3,0 0,5 | -0,160 | 5,6 | 3,86 | 0,682 0,278 | **96 % (86 %)** | 91 % |

Comme le montre ce tableau, la récupération par réduction électrolytique de l'alliage métallique La-Ce est conforme à celle attendue sur la base des courbes d'indicateurs de rendement et ce, que ce soit dans les conditions dans lesquelles ces courbes ont été établies ou pour de plus faibles concentrations en lanthane ou en cérium.

**8. Production d'un alliage métallique lanthane-cérium-néodyme en milieux de chlorures LiCl-KCl :**

On a déterminé par chronopotentiométrie inverse les indicateurs de rendements d'une réduction électrolytique de lanthane, de cérium et de néodyme à 450°C dans quatre milieux composés d'un mélange eutectique LiCl-KCl, de $LaCl_3$, de $CeCl_3$ et de $NdCl_3$ et comprenant respectivement :

- 1 % massique de lanthane, 1 % massique de cérium et 1 % massique de néodyme,
- 2 % massiques de lanthane, 2 % massiques de cérium et 1 % massique de néodyme,
- 3 % massiques de lanthane, 3 % massiques de cérium et 1 % massique de néodyme,
- 3,5 % massiques de lanthane, 3,5 % massique de cérium et 1 % massique de néodyme,

en faisant varier la densité de courant en réduction de -0,095 A/cm$^2$ à -0,95 A/cm$^2$.

Ont ainsi été établies les courbes de la figure 11 qui présentent les indicateurs de rendement obtenus en fonction de la densité du courant imposé en réduction et qui montrent que, pour une concentration massique en néodyme de 1 %, les indicateurs de rendement les plus élevés sont obtenus pour des concentrations massiques en lanthane et en cérium comprises entre 3 % et 3,5 % (courbes C et D de la figure 11).

Ainsi, d'après cette figure, la production d'un alliage métallique La-Ce-Nd par réduction électrolytique à 450°C dans un milieu composé d'un mélange eutectique LiCl-KCl, de LaCl$_3$, de CeCl$_3$ et de NdCl$_3$ à 1 % massique de néodyme devrait être réalisée, de préférence, avec des concentrations massiques en lanthane et en cérium supérieures à 1 % pour obtenir des rendements avoisinant les 80 % (courbes B, C et D).

On a ensuite réalisé des électrolyses à 450°C dans un bain composé de 100 grammes d'un mélange eutectique LiCl-KCl, de LaCl$_3$, de CeCl$_3$ et de NdCl$_3$ et comprenant de 2,8 % à 3,9 % massiques de lanthane, de 1,9 % à 3,2 % massiques de cérium et de 0,6 % à 1,5 % massique de néodyme, en utilisant une d.c.c de -0,100 A/cm$^2$ à -0,300 A/cm$^2$, une d.c.a de 0,180 A/cm$^2$, un $\Delta E$ de 3,5 V à 6,0 V et une durée d'électrolyse de 6 316 s (correspondant à l'élaboration théorique de 1 g d'alliage métallique).

Le tableau VI ci-après présente, pour chacune des électrolyses réalisées, les concentrations en lanthane, en cérium et en néodyme du bain d'électrolyse, notées respectivement [La], [Ce] et [Nd], les valeurs de d.c.c et de $\Delta E$ utilisées, la masse du dépôt brut, notée m$_{dépôt\ brut}$, les masses de lanthane, de cérium et de néodyme électrodéposés, notées respectivement m$_{La}$, mce et m$_{Nd}$, les valeurs de R$_b$ et de R$_v$ obtenues ainsi que l'IR correspondant à cette électrolyse tel qu'établi par chronopotentiométrie inverse.

Tableau VI

| [La] | [Ce] | [Nd] | d.c.c | $\Delta E$ | m$_{dépôt\ brut}$ | m$_{La}$ | m$_{Ce}$ | m$_{Nd}$ | R$_b$ | IR |
|------|------|------|-------|------|------|------|------|------|------|------|
| (% massiques) | | | (A/m$^2$) | (V) | (g) | | (g) | | (R$_v$) | |
| 3,9 | 2,4 | 1,1 | -0,270 | 5,0 | 3,88 | 0,254 | 0,547 | 0,215 | **102 % (81 %)** | 75 % |
| 3,6 | 3,0 | 1,1 | -0,100 | 3,5 | 5,66 | 0,182 | 0,604 | 0,168 | **95 % (61 %)** | 80 % |
| 3,5 | 3,2 | 1,5 | -0,210 | 4,9 | 2,36 | 0,229 | 0,507 | 0,207 | **94 % (70 %)** | 80 % |
| 2,8 | 1,9 | 0,6 | -0,200 | 5,1 | 6,02 | 0,241 | 0,611 | 0,170 | **102 % (74 %)** | 75 % |

Une comparaison des rendements présentés dans ce tableau avec ceux du tableau V ci-avant montre que la présence de néodyme dans un bain de sels fondus comprenant du lanthane et du cérium conduit à une légère baisse des rendements qui restent néanmoins très élevés.

**9. Production d'un alliage métallique néodyme-dysprosium en milieux de chlorofluorures LiCl-LiF :**

On a déterminé par chronopotentiométrie inverse les indicateurs de rendements d'une réduction électrolytique de néodyme et/ou de dysprosium à 550°C dans quatre milieux composés d'un mélange eutectique LiCl-LiF, de NdCl$_3$ et/ou de DyCl$_3$ et comprenant respectivement :

- 0 % massique de néodyme et 1 % massique de dysprosium,
- 7 % massiques de néodyme et 0 % massique de dysprosium,
- 7,1 % massiques de néodyme et 2 % massiques de dysprosium, et
- 6,3 % massiques de néodyme et 1 % massique de dysprosium,

en faisant varier la densité de courant en réduction de -0,025 A/cm$^2$ à -0,8 A/cm$^2$.

Ont ainsi été établies les courbes de la figure 12 qui présentent les indicateurs de rendement obtenus en fonction de la densité du courant imposé en réduction et qui montrent que la production d'un alliage métallique Nd-Dy par réduction électrolytique à 550°C dans un milieu composé d'un mélange eutectique LiCl-LiF, de NdCl$_3$ et de DyCl3 devrait conduire à des rendements avoisinant les 80 % si ce milieu présente une concentration massique en néodyme de 6 % à 7 % et une concentration massique en dysprosium de 1 % à 2 %.

On a ensuite réalisé des électrolyses à 550°C dans un bain composé de 500 grammes d'un mélange eutectique LiCl-LiF, de NdCl$_3$ et de DyCl$_3$ et comprenant de 6,0 % à 7,2 % massiques de néodyme et de 0,9 % à 2 % massiques de dysprosium, en utilisant une d.c.c de -0,080 A/cm$^2$ à -0,230 A/cm$^2$, une d.c.a de 0,020 A/cm$^2$ à 0,060 A/cm$^2$, un $\Delta E$ de 3,6 V à 4,5 V et une durée d'électrolyse de 2 646 s à 8 028 s (correspondant à l'élaboration théorique de 1 g d'alliage métallique).

Le tableau VII ci-après présente, pour chacune des électrolyses réalisées, les concentrations en néodyme et dysprosium du bain d'électrolyse, notées respectivement [Nd] et [Dy], les valeurs de d.c.c, de d.c.a et de $\Delta$E utilisées, la durée de l'électrolyse, notée t, la masse du dépôt brut, notée $m_{\text{dépôt brut}}$, les masses de néodyme et de dysprosium électrodéposés, notées respectivement $m_{Nd}$ et $m_{Dy}$, les valeurs de $R_b$ et de $R_v$ obtenues ainsi que l'IR correspondant à cette électrolyse tel qu'établi par chronopotentiométrie inverse.

Tableau VII

| [Nd] (% mass.) | [Dy] | d.c.c ($A/m^2$) | d.c.a ($A/cm^2$) | $\Delta$E (V) | t (s) | $m_{\text{dépôt brut}}$ (g) | $m_{Nd}$ | $m_{Dy}$ (g) | $R_b$ ($R_v$) | IR |
|---|---|---|---|---|---|---|---|---|---|---|
| 6,0 | 0,9 | -0,230 | 0,060 | 4,5 | 2 646 | 2,83 | 0,73 | 0,17 | **89 % (75 %)** | 78 % |
| 6,0 | 1,9 | -0,210 | 0,050 | 4,1 | 3 087 | 1,77 | 0,51 | 0,23 | **75 % (66 %)** | 78 % |
| 7,0 | 1,0 | -0,160 | 0,040 | 3,9 | 4 014 | 2,31 | 0,62 | 0,14 | **77 % (65 %)** | 78 % |
| 7,2 | 2,0 | -0,080 | 0,020 | 3,6 | 8 028 | 1,25 | 0,43 | 0,20 | **64 % (59 %)** | 78 % |

Ce tableau montre que les conditions opératoires dans lesquelles ont été réalisées les électrolyses ont permis d'obtenir un alliage métallique de néodyme et de dysprosium avec des rendements proches des indicateurs de rendement déterminés par chronopotentiométrie inverse, validant, une fois encore, l'utilisation de la chronopotentiométrie inverse comme outil de sélection de conditions opératoires.

**10. Production d'un alliage métallique lanthane-cérium-néodyme-praséodyme en milieux de chlorures LiCl-KCl :**

On a déterminé par chronopotentiométrie inverse les indicateurs de rendements d'une réduction électrolytique de lanthane, cérium, néodyme et de praséodyme à 450°C dans un milieu composé d'un mélange eutectique LiCl-KCl, de $LaCl_3$, de $CeCl_3$, de $NdCl_3$ et de $PrCl_3$ et comprenant 2,9 % massiques de lanthane, 3,7 % massiques de cérium, 1,1 % massique de néodyme et 0,4 % massique de praséodyme, en faisant varier la densité de courant en réduction de -0,030 $A/cm^2$ à -0,9 $A/cm^2$.
A ainsi été établie la courbe de la figure 13 qui présente les indicateurs de rendement obtenus en fonction de la densité du courant imposé en réduction.
On a ensuite réalisé des électrolyses à 450°C dans un bain composé de 500 grammes d'un mélange eutectique LiCl-KCl, de $LaCl_3$, de $CeCl_3$, de $NdCl_3$ et de $PrCl_3$ et comprenant de 2,3 % à 2,7 % massiques de lanthane, de 2,8 % à 3,3 % massiques de cérium, de 0,85 % à 1 % massique de néodyme et de 0,32 % à 0,4 % massique de praséodyme, en utilisant une d.c.c de -0,095 $A/cm^2$ à -0,300 $A/cm^2$, une d.c.a de 0,020 $A/cm^2$ à 0,080 $A/cm^2$, un $\Delta$E de 4,2 V à 5,4 V et une durée d'électrolyse de 2 161 s à 6 844 s (correspondant à l'élaboration théorique de 1 g d'alliage métallique).
Le tableau VIII ci-après présente, pour chacune des électrolyses réalisées, les concentrations en lanthane, cérium, néodyme et praséodyme du bain d'électrolyse, notées respectivement [La], [Ce], [Nd] et [Pr], les valeurs de d.c.c, de d.c.a et de $\Delta$E utilisées, la durée de l'électrolyse, notée t, la masse du dépôt brut, notée $m_{\text{dépôt brut}}$, les masses de lanthane, de cérium, de néodyme et de praséodyme électrodéposés, notées respectivement $m_{La}$, $m_{Ce}$, $m_{Nd}$ et $m_{Pr}$, les valeurs de $R_b$ et de $R_v$ obtenues ainsi que l'IR correspondant à cette électrolyse tel qu'établi par chronopotentiométrie inverse.

Tableau VIII

| [La] | [Ce] | [Nd] | [Pr] | d.c.c $(A/m^2)$ | d.c.a $(A/cm^2)$ | $\Delta E$ (V) | t (s) | $m_{dépôt\ brut}$ (g) | $m_{La}$ | $m_{Ce}$ | $m_{Nd}$ | $m_{Pr}$ | $R_b$ $(R_v)$ | IR |
|---|---|---|---|---|---|---|---|---|---|---|---|---|---|---|
| | (% massiques) | | | | | | | | | | (g) | | | |
| 2,3 | 2,8 | 0,85 | 0,32 | -0,190 | 0,050 | 4,8 | 3 259 | 4,88 | 0,157 | 0,630 | 0,172 | 0,096 | **106 % (85 %)** | 88 % |
| 2,5 | 3,0 | 0,90 | 0,36 | -0,200 | 0,050 | 4,9 | 3 259 | 4,39 | 0,144 | 0,610 | 0,165 | 0,091 | **101 % (82 %)** | 88 % |
| 2,6 | 3,1 | 0,95 | 0,35 | -0,300 | 0,080 | 5,4 | 2 161 | 3,61 | 0,144 | 0,630 | 0,173 | 0,091 | **104 % (89 %)** | 88 % |
| 2,7 | 3,3 | 1,00 | 0,40 | -0,095 | 0,020 | 4,2 | 6 844 | 4,77 | 0,128 | 0,541 | 0,149 | 0,092 | **91 % (69 %)** | 88 % |

Ce tableau montre que les rendements obtenus pour l'élaboration d'un alliage métallique Ce-La-Nd-Pr sont du même ordre de grandeur que ceux obtenus pour un alliage La-Ce-Nd dans le même type de milieu de sels fondus (LiCl-KCl - cf. tableau VI ci-avant). Cependant, les quantités de sel entraînées semblent plus importantes que dans le cas de l'alliage La-Ce-Nd.

Il montre de plus que ces rendements sont proches des indicateurs de rendement déterminés par chronopotentiométrie inverse.

**11. Production de dysprosium métallique en milieu de chlorure LiCl :**

On a déterminé par chronopotentiométrie inverse les indicateurs de rendements d'une réduction électrolytique de dysprosium à 650°C dans quatre milieux composés de LiCl et de $DyCl_3$ et comprenant respectivement 0,6 %, 2,1 %, 3,9 % et 5,7 % massiques de dysprosium, en faisant varier la densité de courant en réduction de -0,05 $A/cm^2$ à -1,8 $A/cm^2$.

On a également déterminé les indicateurs de rendement d'une réduction électrolytique de dysprosium à 700°C et 750°C dans un milieu composé de LiCl et de $DyCl_3$ et comprenant 5,7 % massiques de dysprosium, en faisant varier la densité de courant en réduction de -0,30 $A/cm^2$ à -2,0 $A/cm^2$, pour comparer ces indicateurs de rendement à ceux obtenus pour la même concentration massique en dysprosium mais à 650°C.

Ont ainsi établies les courbes des figures 14 et 15 qui présentent les indicateurs de rendement obtenus en fonction de la densité du courant imposé en réduction et qui montrent que les indicateurs de rendement les plus élevés sont obtenus pour une concentration massique en dysprosium de l'ordre de 3 % à 6 % et à une température de 650°C (courbes C et D de la figure 14 et courbe A de la figure 15)

On a ensuite réalisé des électrolyses à 650°C dans un bain composé de 100 grammes d'un mélange de LiCl et de $DyCl_3$ comprenant de 4,2 % à 5,1 % massiques de dysprosium, en utilisant une d.c.c de -0,140 $A/cm^2$ à -0,250 $A/cm^2$, une d.c.a de 0,210 $A/cm^2$, un $\Delta E$ de 4,4 V à 4,5 V et une durée d'électrolyse de 4 454 s (correspondant à l'élaboration théorique de 1 g de métal).

Le tableau IX ci-après présente, pour chacune des électrolyses réalisées, la concentration en dysprosium du bain d'électrolyse, notée [Dy], les valeurs de d.c.c et de $\Delta E$ utilisées, la masse du dépôt brut, notée $m_{dépôt\ brut}$, la masse de dysprosium électrodéposé, notée $m_{Dy}$, les valeurs de $R_b$ et de $R_v$ obtenues ainsi que l'IR correspondant à cette électrolyse tel qu'établi par chronopotentiométrie inverse.

Tableau IX

| [Dy] (% massiques) | d.c.c ($A/m^2$) | $\Delta E$ (V) | $m_{dépôt\ brut}$ (g) | $M_{Dy}$ (g) | $R_b$ ($R_v$) | IR |
|---|---|---|---|---|---|---|
| 5,1 | -0,250 | 4,5 | 0,96 | 0,669 | **67 % (66 %)** | 45 % |
| 4,4 | -0,170 | 4,45 | 0,99 | 0,655 | **66 % (65 %)** | 45 % |
| 4,2 | -0,146 | 4,4 | 1,12 | 0,714 | **71 % (71 %)** | 45 % |

Ce tableau montre que les rendements sont supérieurs à 65 %. Malgré l'existence des multiples valences du dysprosium en milieu LiCl, les rendements sont plus faibles que ceux obtenus pour les réductions électrolytiques en milieu LiCl-KCl. Ces résultats permettent de conclure que la réaction chimique faisant intervenir l'intermédiaire $Dy^{2+}$ entre le $Dy^{3+}$ et le métal électrodéposé est nettement plus rapide en milieu LiCl qu'en milieu LiCl-KCl.

**RÉFÉRENCES CITÉES**

**[1]** H. Vogel et B. Friedrich, Proceedings of the 7th European Metallurgical Conference EMC 2015, Düsseldorf, Allemagne

**[2]** D. K. Dysinger et J. E. Murphy, US Bureau of Mines 1994

**[3]** Demande de brevet européen n° 1 845 515

**Revendications**

1. Utilisation de la chronopotentiométrie inverse pour obtenir un indicateur de rendement d'une réduction électrolytique à l'état métallique d'au moins un élément chimique choisi parmi les terres rares et les actinides, la réduction électrolytique étant réalisée dans un milieu de sels fondus.

2. Utilisation selon la revendication 1, dans laquelle la chronopotentiométrie inverse est utilisée pour obtenir des indicateurs de rendement d'une pluralité de réductions électrolytiques de l'élément chimique, dont on fait varier au moins une condition opératoire choisie parmi la composition qualitative du milieu de sels fondus, la concentration de l'élément chimique dans le milieu de sels fondus, la température du milieu de sels fondus et la densité de courant cathodique.

3. Utilisation selon la revendication 2, dans laquelle les indicateurs de rendement sont utilisés pour sélectionner au moins un ensemble de conditions opératoires pour la production à l'état métallique de l'élément chimique par réduction électrolytique dans un milieu de sels fondus, les conditions opératoires étant la composition qualitative du milieu de sels fondus, la concentration de l'élément chimique dans le milieu de sels fondus, la température du milieu de sels fondus et la densité de courant cathodique.

4. Procédé de sélection par chronopotentiométrie inverse d'un ensemble de conditions opératoires pour la production à l'état métallique d'au moins un élément chimique choisi parmi les terres rares et les actinides, par réduction électrolytique dans un milieu de sels fondus, les conditions opératoires étant la composition qualitative du milieu de sels fondus, la concentration de l'élément chimique dans le milieu de sels fondus, la température du milieu de sels fondus et la densité de courant cathodique, lequel procédé comprend les étapes suivantes :

 - choisir *n* ensembles de conditions opératoires, *n* étant un entier au moins égal à 2 et les *n* ensembles de conditions opératoires différant les uns des autres par au moins une condition opératoire ;
 - tester chacun des *n* ensembles de conditions opératoires par chronopotentiométrie inverse pour obtenir *n* chronopotentiogrammes inverses ;
 - déterminer à partir des *n* chronopotentiogrammes inverses ainsi obtenus *n* indicateurs de rendement de réductions électrolytiques de l'élément chimique qui seraient réalisées dans les conditions opératoires des *n* ensembles de conditions opératoires ;
 - comparer entre eux les *n* indicateurs de rendement ainsi obtenus ; et
 - retenir l'un des *n* indicateurs de rendement en fonction du résultat de la comparaison et sélectionner ainsi l'ensemble des conditions opératoires pour lesquelles cet indicateur de rendement a été obtenu.

5. Procédé selon la revendication 4, dans lequel les *n* indicateurs de rendement sont exprimés en pourcentages et sont déterminés en mesurant un temps de transition en oxydation $\tau_{ox}$ et un temps de transition en réduction $\tau_{réd}$ sur les *n* chronopotentiogrammes inverses, en calculant les rapports $\tau_{ox}/\tau_{réd}$ et en multipliant ces rapports par 100.

6. Procédé selon la revendication 4 ou la revendication 5, dans lequel les *n* ensembles de conditions opératoires diffèrent les uns des autres par au plus deux conditions opératoires et, mieux encore, par une seule condition opératoire.

7. Procédé selon la revendication 6, dans lequel les *n* ensembles de conditions opératoires diffèrent les uns des autres par la concentration de l'élément chimique dans le milieu de sels fondus et/ou la température du milieu de sels fondus.

8. Procédé de production à l'état métallique d'au moins un élément chimique choisi parmi les terres rares et les actinides, par réduction électrolytique dans un milieu de sels fondus, lequel procédé comprend les étapes suivantes :

 i) sélectionner un ensemble de conditions opératoires par un procédé selon l'une quelconque des revendications 4 à 7, les conditions opératoires étant la composition qualitative du milieu, la concentration de l'élément chimique dans le milieu, la température du milieu et la densité de courant cathodique ; et
 ii) réaliser la réduction électrolytique dans les conditions opératoires de l'ensemble de conditions opératoires ainsi sélectionné.

9. Utilisation selon l'une quelconque des revendications 1 à 3 ou procédé selon l'une quelconque des revendications 4 à 8, dans laquelle ou lequel le milieu de sels fondus est un milieu de chlorures fondus ou de chlorofluorures fondus.

**10.** Utilisation ou procédé selon la revendication 9, dans laquelle ou lequel le milieu de chlorures fondus comprend du chlorure de lithium ou du chlorure de potassium ou un mélange de ceux-ci dans un rapport massique du chlorure de lithium au chlorure de potassium de 40/60 à 50/50 et, de préférence, égal à 45,5/55,5.

**11.** Utilisation ou procédé selon la revendication 9, dans laquelle ou lequel le milieu de chlorofluorures fondus comprend un mélange de chlorure de lithium et de fluorure de lithium dans un rapport massique du chlorure de lithium au fluorure de lithium de 75/25 à 85/15 et, de préférence, égal à 79,2/20,8.

**12.** Utilisation selon l'une quelconque des revendications 1 à 3 ou procédé selon l'une quelconque des revendications 4 à 11, dans lequel l'élément chimique est choisi parmi les terres rares et, de préférence, parmi le néodyme, le dysprosium, le lanthane, le praséodyme et le cérium.

**13.** Procédé selon l'une quelconque des revendications 8 à 12, dans lequel la concentration de l'élément chimique dans le milieu de sels fondus est inférieure à 10 % massiques.

**14.** Procédé de production de néodyme ou de dysprosium à l'état métallique par réduction électrolytique dans un milieu de sels fondus, dans lequel le milieu de sels fondus est un milieu de chlorofluorures fondus comprenant au moins 3% massiques de néodyme ou de dysprosium et, de préférence, de 3 % à 7 % massiques de néodyme ou de dysprosium, et dans lequel la réduction électrolytique est réalisée à une température au moins égale à 500°C et, de préférence, égale à 550°C.

**15.** Procédé selon la revendication 14, dans lequel le milieu de chlorofluorures fondus comprend un mélange de chlorure de lithium et de fluorure de lithium dans un rapport massique du chlorure de lithium au fluorure de lithium de 75/25 à 85/15 et, de préférence, égal à 79,2/20,8.

**16.** Procédé de production de dysprosium à l'état métallique par réduction électrolytique dans un milieu de sels fondus, dans lequel le milieu de sels fondus est un milieu de chlorures fondus comprenant au moins 3 % massiques de dysprosium et, de préférence, de 3 % à 7 % massiques de dysprosium, et dans lequel la réduction électrolytique est réalisée à une température au moins égale à 400°C et, de préférence, égale à 450°C.

**17.** Procédé selon la revendication 15, dans lequel le milieu de chlorures fondus comprend du chlorure de lithium ou du chlorure de potassium ou un mélange de ceux-ci dans un rapport massique du chlorure de lithium au chlorure de potassium de 40/60 à 50/50 et, de préférence, égal à 45,5/55,5.

E (V vs AgCl/Ag)

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

Europäisches
Patentamt

European
Patent Office

Office européen
des brevets

**RAPPORT DE RECHERCHE EUROPEENNE**

Numéro de la demande

EP 18 18 4569

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | André Leseur: "Chronopotentiométrie dans les chlorures fondus. Application à l'étude des proprtiétés électrochimiques de l'uranium et du plutonium dans l'eutectique LiCl-KCl", Rapport CEA-R-3793, 1969, XP055474337, France Extrait de l'Internet: URL:http://www.iaea.org/inis/collection/NCLCollectionStore/_Public/36/002/36002846.pdf [extrait le 2018-05-11] | 1-11,13 | INV. C25C3/34 C25C7/06 G01N27/26 G01N27/413 |
| Y | * I- Introduction; page 1 - page 5 * * A - Etude des solutions des ions U3+ et U4+; page 44 - page 56 * * C - Solution de chlorure de plutonium; page 60 - page 63 * * V - Conclusion; page 64 - page 65 * ----- | 1-17 | |
| Y | DATABASE WPI Week 201735 11 mai 2017 (2017-05-11) Thomson Scientific, London, GB; AN 2017-316795 XP002781016, & KR 101 734 119 B1 (KIGAM KOREA INST GEOSCIENCE & MINERAL) 11 mai 2017 (2017-05-11) * abrégé * ----- | 1-17 | DOMAINES TECHNIQUES RECHERCHES (IPC) C25C G01N |
| A | EP 0 289 434 A1 (PECHINEY ALUMINIUM [FR]) 2 novembre 1988 (1988-11-02) * page 2, lignes 5-37 * * page 3, ligne 31 - page 5, ligne 40 * ----- | 1-17 | |

Le présent rapport a été établi pour toutes les revendications

| Lieu de la recherche | Date d'achèvement de la recherche | Examinateur |
|---|---|---|
| Munich | 26 novembre 2018 | Desbois, Valérie |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 18 18 4569

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-11-2018

| Document brevet cité au rapport de recherche | | Date de publication | Membre(s) de la famille de brevet(s) | | Date de publication |
|---|---|---|---|---|---|
| KR 101734119 | B1 | 11-05-2017 | KR | 101734119 B1 | 11-05-2017 |
| | | | WO | 2018056717 A1 | 29-03-2018 |
| EP 0289434 | A1 | 02-11-1988 | AU | 1478588 A | 27-10-1988 |
| | | | BR | 8801885 A | 22-11-1988 |
| | | | CA | 1325194 C | 14-12-1993 |
| | | | DE | 3866939 D1 | 30-01-1992 |
| | | | EP | 0289434 A1 | 02-11-1988 |
| | | | ES | 2028344 T3 | 01-07-1992 |
| | | | FR | 2614319 A1 | 28-10-1988 |
| | | | JP | S63282287 A | 18-11-1988 |
| | | | NO | 881703 A | 24-10-1988 |
| | | | SG | 39692 G | 12-06-1992 |
| | | | US | 4828658 A | 09-05-1989 |
| | | | ZA | 8802769 B | 21-10-1988 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• EP 1845515 A

**Littérature non-brevet citée dans la description**

• **H. VOGEL ; B. FRIEDRICH.** *Proceedings of the 7th European Metallurgical Conference EMC,* 2015

• **D. K. DYSINGER ; J. E. MURPHY.** *US Bureau of Mines,* 1994